# EUROPEAN PATENT APPLICATION

(11) **EP 3 253 105 A1**
(43) Date of publication of application: **06.12.2017**
(21) Application number: 15879461.0
(22) Date of filing: 30.01.2015
(51) Int. Cl.: H04W 24/00

(54) **MULTI-CARRIER MEASUREMENT CONFIGURATION METHOD AND DEVICE**

(71) Applicant: Huawei Technologies Co. Ltd., Shenzhen, Guangdong 518129 (CN)
(72) Inventor: YANG, Xiaodong, Shenzhen Guangdong 518129 (CN); LI, Bingzhao, Shenzhen Guangdong 518129 (CN); QUAN, Wei, Shenzhen Guangdong 518129 (CN); CUI, Jie, Shenzhen Guangdong 518129 (CN); ZHANG, Jian, Shenzhen Guangdong 518129 (CN); HU, Zhenxing, Shenzhen Guangdong 518129 (CN); MIAO, Jinhua, Shenzhen Guangdong 518129 (CN)
(74) Representative: Thun, Clemens
(86) International application number: PCT/CN2015/072030
(87) International publication number: WO 2016/119253

(57) **Abstract**

The present invention discloses a multi-carrier measurement configuration method and apparatus, so as to resolve a problem in the prior art that when UE aggregates multiple carriers, a carrier measurement manner cannot be configured, applicability is relatively low, and carrier aggregation efficiency of the UE is reduced. The method is: receiving, by UE, measurement configuration information that is delivered by a network side and that carries gap measurement configuration information or small gap measurement configuration information, and measuring multiple carriers based on received processing configuration information, so as to implement configuration of a carrier measurement manner by the network side, thereby improving applicability of carrier measurement, and improving carrier aggregation efficiency of the UE.

## Description

### TECHNICAL FIELD

The present invention relates to the field of communications technologies, and in particular, to a multi-carrier measurement configuration method and apparatus.

### BACKGROUND

In a communications system, a larger transmission bandwidth is an important factor of improving a data transmission rate in the system. Therefore, to increase a transmission bandwidth, a carrier aggregation (Carrier Aggregation, CA) technology is put forward. Carrier aggregation is to aggregate at least two carriers to support a larger transmission bandwidth.

Before performing carrier aggregation, user equipment (User Equipment, UE) needs to select, from multiple to-be-aggregated candidate carriers by using a measurement result, a specified quantity of carriers for carrier aggregation. Therefore, the UE needs to measure each to-be-aggregated candidate carrier. Currently, in a Long Term Evolution (Long Term Evolution, LTE) system, a gap gap measurement manner is usually used to measure carriers of adjacent frequencies.

For example, if UE working in a cell 1 whose corresponding carrier frequency is P1 needs to measure a carrier frequency P2 that corresponds to an adjacent cell 2, the UE may adjust, within a time of a gap gap configured by a network side for the UE, a receiver of the UE to the frequency P2 for measurement, and the receiver returns to P1 after the time of the gap expires, to normally receive data. Within the time of the gap, the UE cannot receive data sent by the cell 1 corresponding to P1. Currently, in the LTE system, a gap configuration manner that is usually used is to configure a gap measurement time of 6 ms in a period of 40 ms or 80 ms.

The UE may further use a small gap small gap measurement manner to measure carriers of adjacent frequencies. For example, when the UE has at least two radio frequencies (Radio Frequency, RF), the UE uses one of the RFs to receive data in a current cell, and uses the other RF as a measurement RF to measure carriers of adjacent frequencies. However, when the measurement RF is enabled, disabled, or adjusting a frequency, the RF used to receive data in the current cell also cannot normally receive data. That is, when the measurement RF measures a carrier within a measurement time of 6 ms, the RF used to receive data in the current cell cannot receive data within the starting 1 ms and the ending 1 ms, but can receive data within the intermediate 4 ms. Generally, a time, for example, the starting 1 ms or the ending 1 ms, within which data cannot be received is referred to as a small gap.

Currently, because in the existing gap measurement manner and small gap measurement manner, only a specified and fixed mode in the prior art can be used, a carrier measurement manner in the prior art cannot be configured, applicability is relatively low, and carrier aggregation efficiency of UE is reduced.

### SUMMARY

Embodiments of the present invention provide a multi-carrier measurement configuration method and apparatus, so as to resolve a problem in the prior art that when UE aggregates multiple carriers, a carrier measurement manner cannot be configured, applicability is relatively low, and carrier aggregation efficiency of the UE is reduced.

According to a first aspect, a multi-carrier measurement configuration method includes:
receiving, by user equipment UE, a measurement configuration message sent by a network side, where the measurement configuration message includes gap gap measurement configuration information and/or small gap small gap measurement configuration information; and
measuring, by the UE, a carrier according to the measurement configuration message.

With reference to the first aspect, in a first possible implementation manner, the receiving, by UE, a measurement configuration message sent by a network side includes:
receiving, by the UE by using Media Access Control MAC signaling or physical downlink control channel PDCCH signaling or Radio Resource Control RRC signaling, the measurement configuration message sent by the network side.

With reference to the first aspect or the first possible implementation manner of the first aspect, in a second possible implementation manner, the small gap measurement configuration information includes any one or a combination of the following:
a small gap measurement period, a small gap measurement quantity, small gap duration, an offset offset value, or a length of a time interval between two adjacent small gaps.

With reference to the first aspect or the first possible implementation manner of the first aspect, in a third possible implementation manner, the small gap measurement configuration information includes three consecutive small gaps; and
a radio frequency link of the UE consecutively measures two carriers according to the three consecutive small gaps.

With reference to any one of the first aspect or the foregoing possible implementation manners of the first aspect, in a fourth possible implementation manner, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps; and
the UE determines, according to an indication message sent by the network side, to use the first gap measurement configuration information or the second gap measurement configuration information to measure a carrier.

With reference to any one of the first aspect or the foregoing possible implementation manners of the first aspect, in a fifth possible implementation manner, the gap measurement configuration information includes gap duration information, and the gap duration information includes 10 milliseconds, 11 milliseconds, or 12 milliseconds.

With reference to the fifth possible implementation manner of the first aspect, in a sixth possible implementation manner, the UE measures at least two carriers in a gap indicated by the gap duration information.

With reference to any one of the first aspect or the foregoing possible implementation manners of the first aspect, in a seventh possible implementation manner, before the receiving, by UE, a measurement configuration message, the method further includes:
sending, by the UE, a measurement capability message to the network side, where the measurement capability message includes small-based measurement capability information and/or gap-based measurement capability information of the UE.

With reference to the seventh possible implementation manner of the first aspect, in an eighth possible implementation manner, the sending, by the UE, a measurement capability message to the network side includes:
sending, by the UE, the measurement capability message to the network side by using Radio Resource Control RRC signaling.

With reference to the seventh or the eighth possible implementation manner of the first aspect, in a ninth possible implementation manner, the small gap-based measurement capability information includes any one or a combination of the following:
a small gap measurement period;
a small gap measurement quantity;
small gap duration;
an offset offset value; or
a length of a time interval between two adjacent small gaps.

With reference to the seventh or the eighth possible implementation manner of the first aspect, in a tenth possible implementation manner, the gap-based measurement capability information includes any one or a combination of the following:
a gap measurement period;
a gap measurement quantity;
gap duration;
an offset offset value; or
a length of a time interval between two adjacent gaps.

With reference to any one of the seventh to the tenth possible implementation manners of the first aspect, in an eleventh possible implementation manner, the small gap-based measurement capability information includes at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner:
   small gap measurement indication information of at least one carrier,
   small gap measurement indication information of at least one measurement carrier aggregation manner,
   small gap measurement indication information of at least one frequency band, or
   small gap measurement indication information of at least one frequency band combination; or
   the gap-based measurement capability information includes: at least one working carrier aggregation manner, and gap measurement indication information of each working carrier aggregation manner, or at least one or a combination of the following corresponding to each working carrier aggregation manner:
      gap measurement indication information of at least one carrier,
      gap measurement indication information of at least one measurement carrier aggregation manner,
      gap measurement indication information of at least one frequency band, or
      gap measurement indication information of at least one frequency band combination; or
      the gap-based measurement capability information includes: at least one operating band combination manner, and gap measurement indication information of each operating band combination manner, or at least one or a combination of the following corresponding to each operating band combination manner:
         gap measurement indication information of at least one carrier,
         gap measurement indication information of at least one measurement carrier aggregation manner,
         gap measurement indication information of at least one frequency band, or
         gap measurement indication information of at least one frequency band combination.

With reference to the eleventh possible implementation manner of the first aspect, in a twelfth possible implementation manner, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

With reference to the eleventh or the twelfth possible implementation manner of the first aspect, in a thirteenth possible implementation manner, gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

According to a second aspect, a multi-carrier measurement configuration method includes:
receiving, by a network side, a measurement capability message sent by user equipment UE, where the measurement capability message includes small-based measurement capability information and/or gap-based measurement capability information of the UE; and
sending, by the network side, a measurement configuration message to the UE according to the measurement capability message, where the measurement configuration message includes gap gap measurement configuration information and/or small gap small gap measurement configuration information, so that the UE measures a carrier according to the measurement configuration message.

With reference to the second aspect, in a first possible implementation manner, the receiving, by a network side, a measurement capability message sent by UE includes:
receiving, by the network side by using Radio Resource Control RRC signaling, the measurement capability message sent by the UE.

With reference to the second aspect or the first possible implementation manner of the second aspect, in a second possible implementation manner, the small gap-based measurement capability information includes any one or a combination of the following:
a small gap measurement period;
a small gap measurement quantity;
small gap duration;
an offset offset value; or
a length of a time interval between two adjacent small gaps.

With reference to the second aspect or the first possible implementation manner of the second aspect, in a third possible implementation manner, the gap-based measurement capability information includes any one or a combination of the following:
a gap measurement period;
a gap measurement quantity;
gap duration;
an offset offset value; or
a length of a time interval between two adjacent gaps.

With reference to any one of the second aspect or the foregoing possible implementation manners of the second aspect, in a fourth possible implementation manner, the small gap-based measurement capability information includes at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner:
   small gap measurement indication information of at least one carrier,
   small gap measurement indication information of at least one measurement carrier aggregation manner,
   small gap measurement indication information of at least one frequency band, or
   small gap measurement indication information of at least one frequency band combination; or
   the gap-based measurement capability information includes: at least one working carrier aggregation manner, and gap measurement indication information of each working carrier aggregation manner, or at least one or a combination of the following corresponding to each working carrier aggregation manner:
      gap measurement indication information of at least one carrier,
      gap measurement indication information of at least one measurement carrier aggregation manner,
      gap measurement indication information of at least one frequency band, or
      gap measurement indication information of at least one frequency band combination; or
      the gap-based measurement capability information includes: at least one operating band combination manner, and gap measurement indication information of each operating band combination manner, or at least one or a combination of the following corresponding to each operating band combination manner:
         gap measurement indication information of at least one carrier,
         gap measurement indication information of at least one measurement carrier aggregation manner,
         gap measurement indication information of at least one frequency band, or
         gap measurement indication information of at least one frequency band combination.

With reference to the fourth possible implementation manner of the second aspect, in a fifth possible implementation manner, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

With reference to the fourth or the fifth possible implementation manner of the second aspect, in a sixth possible implementation manner, gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

With reference to any one of the second aspect or the foregoing possible implementation manners of the second aspect, in a seventh possible implementation manner, the sending, by the network side, a measurement configuration message to the UE includes:
sending, by the network side, the measurement configuration message to the UE by using Media Access Control MAC signaling or physical downlink control channel PDCCH signaling or Radio Resource Control RRC signaling.

With reference to the second aspect or the foregoing possible implementation manners of the second aspect, in an eighth possible implementation manner, the small gap measurement configuration information includes any one or a combination of the following:
a small gap measurement period, a small gap measurement quantity, small gap duration, an offset offset value, or a length of a time interval between two adjacent small gaps.

With reference to any one of the second aspect or the first to the seventh possible implementation manners of the second aspect, in a ninth possible implementation manner, the small gap measurement configuration information includes three consecutive small gaps, so that a radio frequency link of the UE consecutively measures two carriers according to the three consecutive small gaps.

With reference to any one of the second aspect or the foregoing possible implementation manners of the second aspect, in a tenth possible implementation manner, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

With reference to the tenth possible implementation manner of the second aspect, in an eleventh possible implementation manner, after the sending, by the network side, a measurement configuration message to the UE, the method further includes:
sending, by the network side, an indication message to the UE, so that the UE determines, according to the indication message sent by the network side, to use the first gap measurement configuration information or the second gap measurement configuration information to measure a carrier.

With reference to any one of the second aspect or the foregoing possible implementation manners of the second aspect, in a twelfth possible implementation manner, the gap measurement configuration information includes gap duration information, and the gap duration information includes 10 milliseconds, 11 milliseconds, or 12 milliseconds, so that the UE measures at least two carriers in a gap indicated by the gap duration information.

According to a third aspect, an SCell channel measurement method includes:
receiving a channel state information CSI measurement indication or a CSI reporting indication sent by a network side, and measuring, according to the CSI measurement indication or the CSI reporting indication, a channel corresponding to a secondary serving cell SCell; and
determining CSI report information according to a channel measurement result, and reporting the CSI report information to the network side.

With reference to the third aspect, in a first possible implementation manner, the receiving a channel state indication CSI measurement indication or a CSI reporting indication sent by a network side includes:
receiving a periodic CSI measurement indication or a periodic CSI reporting indication that is sent by the network side by using Radio Resource Control RRC signaling; or
receiving an aperiodic CSI measurement indication or an aperiodic CSI reporting indication that is sent by the network side by using physical layer signaling.

With reference to the third aspect or the first possible implementation manner of the third aspect, in a second possible implementation manner, the measuring, according to the CSI measurement indication or the CSI reporting indication, a channel corresponding to an SCell includes:
determining a location of a CSI measurement reference resource according to a location of a reporting subframe carried in the CSI measurement indication or the CSI reporting indication, and measuring the CSI measurement reference resource corresponding to the location of the CSI measurement reference resource.

With reference to the second possible implementation manner of the third aspect, in a third possible implementation manner, the CSI measurement reference resource includes at least one or a combination of the following: a cell-specific reference signal CRS, a channel state information-reference signal CSI-RS, or channel state information-interference measurement CSI-IM.

With reference to the second or the third possible implementation manner of the third aspect, in a fourth possible implementation manner, the determining CSI report information according to a channel measurement result includes:
determining whether there is a CSI measurement reference resource, and determining the CSI reporting information according to a determining result and the channel measurement result; or
determining a current channel state of the SCell, and determining the CSI reporting information according to the current channel state and the channel measurement result; or
determining whether there is a CSI measurement reference resource, determining a current channel state of the SCell, and determining the CSI reporting information according to a determining result, the current channel state, and the channel measurement result.

With reference to the fourth possible implementation manner of the third aspect, in a fifth possible implementation manner, the determining whether there is a CSI measurement reference resource includes:
receiving a reference resource indication sent by the network side, where the reference resource indication includes a time period for sending a reference signal, or a time period for canceling sending of a reference signal, or a time period for stop sending a reference signal; and
determining, according to the reference resource indication, whether there is a reference signal, and determining, according to a determining result of a reference signal, whether there is a CSI measurement reference resource to which a reference signal belongs; or
measuring a reference signal at the location of the CSI measurement reference resource, and obtaining a measurement value of the reference signal; comparing the measurement value of the reference signal with a specified first threshold; and if the measurement value of the reference signal is greater than or equal to the first threshold, determining that there is a CSI measurement reference resource; otherwise, determining that there is no CSI measurement reference resource.

With reference to the fourth possible implementation manner of the third aspect, in a sixth possible implementation manner, the determining a current channel state of the SCell includes:
performing radio link monitoring RLM on the SCell, and if an RLM result is a radio link failure RLF, determining that the current channel state is an abnormal state; otherwise, determining that the current channel state is a normal state; or
measuring, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determining that the current channel state is an abnormal state; otherwise, determining that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determining that the current channel state is an abnormal state; otherwise, determining that the current channel state is a normal state.

With reference to the fourth possible implementation manner of the third aspect, in a seventh possible implementation manner, the determining the CSI reporting information according to a determining result and the channel measurement result includes:
when the determining result is that there is a CSI measurement reference resource, using a measurement result of the CSI measurement reference resource as the CSI reporting information; or
when the determining result is that there is no CSI measurement reference resource, using a prestored effective CSI measurement result or a preset CSI measurement value as the CSI reporting information, where the effective CSI measurement result is a non-out-of-range Out Of Range CSI measurement result.

With reference to the fourth possible implementation manner of the third aspect, in an eighth possible implementation manner, the determining the CSI reporting information according to the current channel state and the channel measurement result includes:
when the current channel state is a normal state, using a measurement result of the CSI measurement reference resource as the CSI reporting information; or
when the current channel state is an abnormal state, setting the CSI reporting information to Out Of Range or a reference signal tracking failure indication of the SCell.

With reference to the fourth possible implementation manner of the third aspect, in a ninth possible implementation manner, the determining the CSI reporting information according to a determining result, the current channel state, and the channel measurement result includes:
when the current channel state is a normal state, and the determining result is that there is a CSI measurement reference resource, using a measurement result of the CSI measurement reference resource as the CSI reporting information; or
when the current channel state is a normal state, and the determining result is that there is no CSI measurement reference resource, using a prestored effective CSI measurement result or a preset CSI measurement value as the CSI reporting information, where the effective CSI measurement result is a non-out-of-range Out Of Range CSI measurement result; or
when the current channel state is an abnormal state, setting the CSI reporting information to Out Of Rang or a reference signal tracking failure indication of the SCell.

According to a fourth aspect, an SCell channel measurement method includes:
sending a channel state information CSI measurement indication or a CSI reporting indication to user equipment UE, so that the UE measures, according to the CSI measurement indication or the CSI reporting indication, a channel corresponding to a secondary serving cell SCell;
receiving CSI reporting information that is reported by the UE and that is determined according to a channel measurement result; and
determining, according to the CSI reporting information, scheduling of the UE.

With reference to the fourth aspect, in a first possible implementation manner, the sending a channel state information CSI measurement indication or a CSI reporting indication to UE includes:
sending a periodic CSI measurement indication or a periodic CSI reporting indication to the UE by using Radio Resource Control RRC signaling; or
sending an aperiodic CSI measurement indication or an aperiodic CSI reporting indication to the UE by using physical layer signaling.

With reference to the fourth aspect or the first possible implementation manner of the fourth aspect, in a second possible implementation manner, the determining, according to the CSI reporting information, scheduling of the UE includes:
determining, according to a location of a reporting subframe receiving the CSI reporting information, whether there is a CSI measurement reference resource; and
determining, according to a determining result and the CSI reporting information, scheduling of the UE.

With reference to the second possible implementation manner of the fourth aspect, in a third possible implementation manner, the determining, according to a determining result and the CSI reporting information, scheduling of the UE includes:
when the determining result is that there is a CSI measurement reference resource, and the CSI reporting information does not include Out of Range and does not include a reference signal tracking failure indication of the SCell, performing data transmission scheduling on the UE according to the CSI reporting information;
when the determining result is that there is a CSI measurement reference resource, and the CSI reporting information includes Out of Range or includes a reference signal tracking failure indication of the SCell, skipping performing data transmission scheduling on the UE;
when the determining result is that there is no CSI measurement reference resource, and the CSI reporting information includes Out of Range or includes a reference signal tracking failure indication of the SCell, skipping performing data transmission scheduling on the UE; or
when the determining result is that there is no CSI measurement reference resource, and the CSI reporting information does not include Out of Range and does not include a reference signal tracking failure indication of the SCell, performing data transmission scheduling on the UE according to the CSI reporting information.

According to a fifth aspect, a multi-carrier measurement configuration apparatus includes:
a receiving unit, configured to receive a measurement configuration message sent by a network side, where the measurement configuration message includes gap gap measurement configuration information and/or small gap small gap measurement configuration information; and
an operation unit, configured to measure a carrier according to the measurement configuration message.

With reference to the fifth aspect, in a first possible implementation manner, the receiving unit is specifically configured to:
receive, by using Media Access Control MAC signaling or physical downlink control channel PDCCH signaling or Radio Resource Control RRC signaling, the measurement configuration message sent by the network side.

With reference to the fifth aspect or the first possible implementation manner of the fifth aspect, in a second possible implementation manner, the small gap measurement configuration information includes any one or a combination of the following:
a small gap measurement period, a small gap measurement quantity, small gap duration, an offset offset value, or a length of a time interval between two adjacent small gaps.

With reference to the fifth aspect or the first possible implementation manner of the fifth aspect, in a third possible implementation manner, the small gap measurement configuration information includes three consecutive small gaps; and
a radio frequency link of the UE consecutively measures two carriers according to the three consecutive small gaps.

With reference to any one of the fifth aspect or the foregoing possible implementation manners of the fifth aspect, in a fourth possible implementation manner, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps; and
the operation unit determines, according to an indication message sent by the network side, to use the first gap measurement configuration information or the second gap measurement configuration information to measure a carrier.

With reference to any one of the fifth aspect or the foregoing possible implementation manners of the fifth aspect, in a fifth possible implementation manner, the gap measurement configuration information includes gap duration information, and the gap duration information includes 10 milliseconds, 11 milliseconds, or 12 milliseconds.

With reference to the fifth possible implementation manner of the fifth aspect, in a sixth possible implementation manner, the operation unit is specifically configured to:
measure at least two carriers in a gap indicated by the gap duration information.

With reference to any one of the fifth aspect or the foregoing possible implementation manners of the fifth aspect, in a seventh possible implementation manner, the apparatus further includes:
a sending unit, configured to: before the receiving unit receives the measurement configuration message, send a measurement capability message to the network side, where the measurement capability message includes small-based measurement capability information and/or gap-based measurement capability information of the apparatus.

With reference to the seventh possible implementation manner of the fifth aspect, in an eighth possible implementation manner, the sending unit is specifically configured to:
send the measurement capability message to the network side by using Radio Resource Control RRC signaling.

With reference to the seventh or the eighth possible implementation manner of the fifth aspect, in a ninth possible implementation manner, the small gap-based measurement capability information includes any one or a combination of the following:
a small gap measurement period;
a small gap measurement quantity;
small gap duration;
an offset offset value; or
a length of a time interval between two adjacent small gaps.

With reference to the seventh or the eighth possible implementation manner of the fifth aspect, in a tenth possible implementation manner, the gap-based measurement capability information includes any one or a combination of the following:
a gap measurement period;
a gap measurement quantity;
gap duration;
an offset offset value; or
a length of a time interval between two adjacent gaps.

With reference to any one of the seventh to the tenth possible implementation manners of the fifth aspect, in an eleventh possible implementation manner, the small gap-based measurement capability information includes at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner:
   small gap measurement indication information of at least one carrier,
   small gap measurement indication information of at least one measurement carrier aggregation manner,
   small gap measurement indication information of at least one frequency band, or
   small gap measurement indication information of at least one frequency band combination; or
   the gap-based measurement capability information includes: at least one working carrier aggregation manner, and gap measurement indication information of each working carrier aggregation manner, or at least one or a combination of the following corresponding to each working carrier aggregation manner:
      gap measurement indication information of at least one carrier,
      gap measurement indication information of at least one measurement carrier aggregation manner,
      gap measurement indication information of at least one frequency band, or
      gap measurement indication information of at least one frequency band combination; or
      the gap-based measurement capability information includes: at least one operating band combination manner, and gap measurement indication information of each operating band combination manner, or at least one or a combination of the following corresponding to each operating band combination manner:
         gap measurement indication information of at least one carrier,
         gap measurement indication information of at least one measurement carrier aggregation manner,
         gap measurement indication information of at least one frequency band, or
         gap measurement indication information of at least one frequency band combination.

With reference to the eleventh possible implementation manner of the fifth aspect, in a twelfth possible implementation manner, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

With reference to the eleventh or the twelfth possible implementation manner of the fifth aspect, in a thirteenth possible implementation manner, gap measurement indication information or small gap measurement indication information of any carrier that corresponds to any working carrier aggregation manner is used to indicate whether a gap or a small gap is needed, when the apparatus works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the apparatus works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the apparatus works in any working carrier aggregation manner, for measuring any carrier in any frequency band or any measurement carrier aggregation manner;
gap measurement indication information or small gap measurement indication information of any frequency band combination that corresponds to any working carrier aggregation manner is used to indicate whether a gap or a small gap is needed, when the apparatus works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the apparatus works in any operating band combination manner, for measuring any carrier;
gap measurement indication information or small gap measurement indication information of any measurement carrier aggregation manner that corresponds to any operating band combination manner is used to indicate whether a gap or a small gap is needed, when the apparatus works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the apparatus works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the apparatus works in any operating band combination manner, for measuring any carrier aggregation manner in the one frequency band combination;
gap measurement indication information or small gap measurement indication information of any working carrier aggregation manner is used to indicate whether a gap or a small gap is needed, when the apparatus works in any working carrier aggregation manner, for measuring any carrier or any measurement carrier aggregation manner; and
gap measurement indication information or small gap measurement indication information of any operating band combination manner is used to indicate whether a gap or a small gap is needed, when the apparatus works in any operating band combination manner, for measuring any carrier or any measurement carrier aggregation manner.

According to a sixth aspect, a multi-carrier measurement configuration apparatus includes:
a receiving unit, configured to receive a measurement capability message sent by user equipment UE, where the measurement capability message includes small-based measurement capability information and/or gap-based measurement capability information of the UE; and
a processing unit, configured to send a measurement configuration message to the UE according to the measurement capability message, where the measurement configuration message includes gap gap measurement configuration information and/or small gap small gap measurement configuration information, so that the UE measures a carrier according to the measurement configuration message.

With reference to the sixth aspect, in a first possible implementation manner, the receiving unit is specifically configured to:
receive, by using Radio Resource Control RRC signaling, the measurement capability message sent by the UE.

With reference to the sixth aspect or the first possible implementation manner of the sixth aspect, in a second possible implementation manner, the small gap-based measurement capability information includes any one or a combination of the following:
a small gap measurement period;
a small gap measurement quantity;
small gap duration;
an offset offset value; or
a length of a time interval between two adjacent small gaps.

With reference to the sixth aspect or the first possible implementation manner of the sixth aspect, in a third possible implementation manner, the gap-based measurement capability information includes any one or a combination of the following:
a gap measurement period;
a gap measurement quantity;
gap duration;
an offset offset value; or
a length of a time interval between two adjacent gaps.

With reference to any one of the sixth aspect or the foregoing possible implementation manners of the sixth aspect, in a fourth possible implementation manner, the small gap-based measurement capability information includes at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner:
   small gap measurement indication information of at least one carrier,
   small gap measurement indication information of at least one measurement carrier aggregation manner,
   small gap measurement indication information of at least one frequency band, or
   small gap measurement indication information of at least one frequency band combination; or
   the gap-based measurement capability information includes: at least one working carrier aggregation manner, and gap measurement indication information of each working carrier aggregation manner, or at least one or a combination of the following corresponding to each working carrier aggregation manner:
      gap measurement indication information of at least one carrier,
      gap measurement indication information of at least one measurement carrier aggregation manner,
      gap measurement indication information of at least one frequency band, or
      gap measurement indication information of at least one frequency band combination; or
      the gap-based measurement capability information includes: at least one operating band combination manner, and gap measurement indication information of each operating band combination manner, or at least one or a combination of the following corresponding to each operating band combination manner:
         gap measurement indication information of at least one carrier,
         gap measurement indication information of at least one measurement carrier aggregation manner,
         gap measurement indication information of at least one frequency band, or
         gap measurement indication information of at least one frequency band combination.

With reference to the fourth possible implementation manner of the sixth aspect, in a fifth possible implementation manner, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

With reference to the fourth or the fifth possible implementation manner of the sixth aspect, in a sixth possible implementation manner, gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

With reference to any one of the sixth aspect or the foregoing possible implementation manners of the sixth aspect, in a seventh possible implementation manner, the processing unit is specifically configured to:
send the measurement configuration message to the UE by using Media Access Control MAC signaling or physical downlink control channel PDCCH signaling or Radio Resource Control RRC signaling.

With reference to the sixth aspect or the foregoing possible implementation manners of the sixth aspect, in an eighth possible implementation manner, the small gap measurement configuration information includes any one or a combination of the following:
a small gap measurement period, a small gap measurement quantity, small gap duration, an offset offset value, or a length of a time interval between two adjacent small gaps.

With reference to any one of the sixth aspect or the first to the seventh possible implementation manners of the sixth aspect, in a ninth possible implementation manner, the small gap measurement configuration information includes three consecutive small gaps, so that a radio frequency link of the UE consecutively measures two carriers according to the three consecutive small gaps.

With reference to any one of the sixth aspect or the foregoing possible implementation manners of the sixth aspect, in a tenth possible implementation manner, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

With reference to the tenth possible implementation manner of the sixth aspect, in an eleventh possible implementation manner, the processing unit is further configured to:
after the network side sends the measurement configuration message to the UE, send an indication message to the UE, so that the UE determines, according to the indication message sent by the network side, to use the first gap measurement configuration information or the second gap measurement configuration information to measure a carrier.

With reference to any one of the sixth aspect or the foregoing possible implementation manners of the sixth aspect, in a twelfth possible implementation manner, the gap measurement configuration information includes gap duration information, and the gap duration information includes 10 milliseconds, 11 milliseconds, or 12 milliseconds, so that the UE measures at least two carriers in a gap indicated by the gap duration information.

According to a seventh aspect, an SCell channel measurement apparatus includes:
a receiving unit, configured to receive a channel state information CSI measurement indication or a CSI reporting indication sent by a network side;
a measurement unit, configured to measure, according to the CSI measurement indication or the CSI reporting indication, a channel corresponding to a secondary serving cell SCell; and
a reporting unit, configured to: determine CSI report information according to a channel measurement result, and report the CSI report information to the network side.

With reference to the seventh aspect, in a first possible implementation manner, the receiving unit is specifically configured to:
receive a periodic CSI measurement indication or a periodic CSI reporting indication that is sent by the network side by using Radio Resource Control RRC signaling; or
receive an aperiodic CSI measurement indication or an aperiodic CSI reporting indication that is sent by the network side by using physical layer signaling.

With reference to the seventh aspect or the first possible implementation manner of the seventh aspect, in a second possible implementation manner, the measurement unit is specifically configured to:
determine a location of a CSI measurement reference resource according to a location of a reporting subframe carried in the CSI measurement indication or the CSI reporting indication, and measure the CSI measurement reference resource corresponding to the location of the CSI measurement reference resource.

With reference to the second possible implementation manner of the seventh aspect, in a third possible implementation manner, the CSI measurement reference resource includes at least one or a combination of the following: a cell-specific reference signal CRS, a channel state information-reference signal CSI-RS, or channel state information-interference measurement CSI-IM.

With reference to the second or the third possible implementation manner of the seventh aspect, in a fourth possible implementation manner, when determining the CSI report information according to the channel measurement result, the reporting unit is specifically configured to:
determine whether there is a CSI measurement reference resource, and determine the CSI reporting information according to a determining result and the channel measurement result; or
determine a current channel state of the SCell, and determine the CSI reporting information according to the current channel state and the channel measurement result; or
determine whether there is a CSI measurement reference resource, determine a current channel state of the SCell, and determine the CSI reporting information according to a determining result, the current channel state, and the channel measurement result.

With reference to the fourth possible implementation manner of the seventh aspect, in a fifth possible implementation manner, when determining whether there is a CSI measurement reference resource, the reporting unit is specifically configured to:
receive a reference resource indication sent by the network side, where the reference resource indication includes a time period for sending a reference signal, or a time period for canceling sending of a reference signal, or a time period for stop sending a reference signal; and
determine, according to the reference resource indication, whether there is a reference signal, and determine, according to a determining result of a reference signal, whether there is a CSI measurement reference resource to which a reference signal belongs; or
measure a reference signal at the location of the CSI measurement reference resource, and obtain a measurement value of the reference signal; compare the measurement value of the reference signal with a specified first threshold; and if the measurement value of the reference signal is greater than or equal to the first threshold, determine that there is a CSI measurement reference resource; otherwise, determine that there is no CSI measurement reference resource.

With reference to the fourth possible implementation manner of the seventh aspect, in a sixth possible implementation manner, when determining the current channel state of the SCell, the reporting unit is specifically configured to:
perform radio link monitoring RLM on the SCell, and if an RLM result is a radio link failure RLF, determine that the current channel state is an abnormal state; otherwise, determine that the current channel state is a normal state; or
measure, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determine that the current channel state is an abnormal state; otherwise, determine that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determine that the current channel state is an abnormal state; otherwise, determine that the current channel state is a normal state.

With reference to the fourth possible implementation manner of the seventh aspect, in a seventh possible implementation manner, when determining the CSI reporting information according to the determining result and the channel measurement result, the reporting unit is specifically configured to:
when the determining result is that there is a CSI measurement reference resource, use a measurement result of the CSI measurement reference resource as the CSI reporting information; or
when the determining result is that there is no CSI measurement reference resource, use a prestored effective CSI measurement result or a preset CSI measurement value as the CSI reporting information, where the effective CSI measurement result is a non-out-of-range Out Of Range CSI measurement result.

With reference to the fourth possible implementation manner of the seventh aspect, in an eighth possible implementation manner, when determining the CSI reporting information according to the current channel state and the channel measurement result, the reporting unit is specifically configured to:
when the current channel state is a normal state, use a measurement result of the CSI measurement reference resource as the CSI reporting information; or
when the current channel state is an abnormal state, set the CSI reporting information to Out Of Range or a reference signal tracking failure indication of the SCell.

With reference to the fourth possible implementation manner of the seventh aspect, in a ninth possible implementation manner, when determining the CSI reporting information according to the determining result, the current channel state, and the channel measurement result, the reporting unit is specifically configured to:
when the current channel state is a normal state, and the determining result is that there is a CSI measurement reference resource, use a measurement result of the CSI measurement reference resource as the CSI reporting information; or
when the current channel state is a normal state, and the determining result is that there is no CSI measurement reference resource, use a prestored effective CSI measurement result or a preset CSI measurement value as the CSI reporting information, where the effective CSI measurement result is a non-out-of-range Out Of Range CSI measurement result; or
when the current channel state is an abnormal state, set the CSI reporting information to Out Of Rang or a reference signal tracking failure indication of the SCell.

According to an eighth aspect, an SCell channel measurement apparatus includes:
a sending unit, configured to send a channel state information CSI measurement indication or a CSI reporting indication to user equipment UE, so that the UE measures, according to the CSI measurement indication or the CSI reporting indication, a channel corresponding to a secondary serving cell SCell;
a receiving unit, configured to receive CSI reporting information that is reported by the UE and that is determined according to a channel measurement result; and
a scheduling unit, configured to determine, according to the CSI reporting information, scheduling of the UE.

With reference to the eighth aspect, in a first possible implementation manner, the sending unit is specifically configured to:
send a periodic CSI measurement indication or a periodic CSI reporting indication to the UE by using Radio Resource Control RRC signaling; or
send an aperiodic CSI measurement indication or an aperiodic CSI reporting indication to the UE by using physical layer signaling.

With reference to the eighth aspect or the first possible implementation manner of the eighth aspect, in a second possible implementation manner, the scheduling unit is specifically configured to:
determine, according to a location of a reporting subframe receiving the CSI reporting information, whether there is a CSI measurement reference resource; and
determine, according to a determining result and the CSI reporting information, scheduling of the UE.

With reference to the second possible implementation manner of the eighth aspect, in a third possible implementation manner, when determining, according to the determining result and the CSI reporting information, scheduling of the UE, the scheduling unit is specifically configured to:
when the determining result is that there is a CSI measurement reference resource, and the CSI reporting information does not include Out of Range and does not include a reference signal tracking failure indication of the SCell, perform data transmission scheduling on the UE according to the CSI reporting information;
when the determining result is that there is a CSI measurement reference resource, and the CSI reporting information includes Out of Range or includes a reference signal tracking failure indication of the SCell, skip performing data transmission scheduling on the UE;
when the determining result is that there is no CSI measurement reference resource, and the CSI reporting information includes Out of Range or includes a reference signal tracking failure indication of the SCell, skip performing data transmission scheduling on the UE; or
when the determining result is that there is no CSI measurement reference resource, and the CSI reporting information does not include Out of Range and does not include a reference signal tracking failure indication of the SCell, perform data transmission scheduling on the UE according to the CSI reporting information.

By means of the technical solutions of the present invention, UE receives a measurement configuration message that is sent by a network side and that includes gap measurement configuration information and/or small gap measurement configuration information, and measures multiple carriers according to the measurement configuration message, so as to implement configuration of a carrier measurement manner by the network side, thereby improving applicability of carrier measurement, and improving carrier aggregation efficiency of the UE.

### BRIEF DESCRIPTION OF DRAWINGS

FIG. 1 is a flowchart of a multi-carrier measurement configuration method on a UE side according to an embodiment of the present invention;
FIG. 2 is a flowchart of a multi-carrier measurement configuration method on a network side according to an embodiment of the present invention;
FIG. 3 is a structural diagram of a multi-carrier measurement configuration apparatus on a UE side according to an embodiment of the present invention;
FIG. 4 is a structural diagram of a multi-carrier measurement configuration apparatus on a network side according to an embodiment of the present invention;
FIG. 5 is a structural diagram of a terminal device according to an embodiment of the present invention;
FIG. 6 is a structural diagram of a base station according to an embodiment of the present invention;
FIG. 7 is a flowchart of an SCell channel measurement method on a UE side according to an embodiment of the present invention;
FIG. 8 is a flowchart of an SCell channel measurement method on a network side according to an embodiment of the present invention;
FIG. 9 is a structural diagram of an SCell channel measurement apparatus on a UE side according to an embodiment of the present invention;
FIG. 10 is a structural diagram of an SCell channel measurement apparatus on a network side according to an embodiment of the present invention;
FIG. 11 is a structural diagram of UE according to an embodiment of the present invention; and
FIG. 12 is a structural diagram of a base station according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The embodiments of the present invention provide a multi-carrier measurement configuration method and apparatus, so as to resolve a problem in the prior art that when UE aggregates multiple carriers, a carrier measurement manner cannot be configured, applicability is relatively low, and carrier aggregation efficiency of the UE is reduced. The method and the apparatus are based on a same inventive concept. Because the principles for resolving problems of the method and the apparatus are similar, implementations of the apparatus and the method can be cross-referenced. No repeated description is provided.

By means of the multi-carrier measurement configuration method provided in the present invention, UE receives a measurement configuration message that is delivered by a network side and that carries gap measurement configuration information or small gap measurement configuration information, and measures multiple carriers based on a received processing configuration message, so as to implement configuration of a carrier measurement manner by the network side, thereby improving applicability of carrier measurement, and improving carrier aggregation efficiency of the UE.

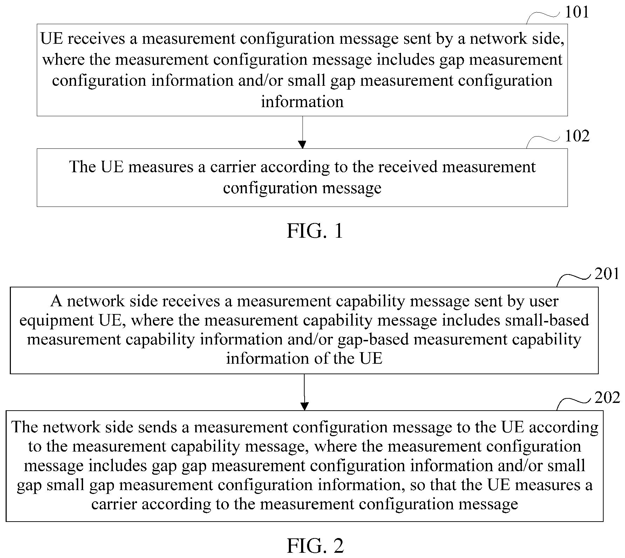

An embodiment of the present invention further provides a multi-carrier measurement configuration method, applied to a terminal device that can perform carrier measurement. Referring to FIG. 1, a specific processing procedure of the method includes the following steps.

Step 101: UE receives a measurement configuration message sent by a network side, where the measurement configuration message includes gap measurement configuration information and/or small gap measurement configuration information.

Specifically, the UE receives, by using Media Access Control (Medium Access Control, MAC) signaling or physical downlink control channel (Physical Downlink Control Channel, PDCCH) signaling or Radio Resource Control (Radio Resource Control, RRC) signaling, a measurement configuration message that is delivered by the network side and that carries gap measurement configuration information or small gap measurement configuration information.

The small gap measurement configuration information includes any one or a combination of the following: a small gap measurement period, a small gap measurement quantity, small gap duration, an offset offset value, or a length of a time interval between two adjacent small gaps; or
the small gap measurement configuration information includes three consecutive small gaps.

When the small gap measurement configuration information includes three consecutive small gaps, measuring, by the UE, a carrier according to the measurement configuration message includes: consecutively measuring, by a radio frequency link of the UE, two carriers according to the three small gaps.

The gap measurement configuration information includes at least first gap measurement configuration information and second gap measurement configuration information, where each piece of gap measurement configuration information includes one or a combination of the following: a gap measurement period, a gap measurement quantity, gap duration, an offset offset value, or a length of a time interval between two adjacent gaps. Generally, different gap measurement configuration information may have different quantities of parameters, and a same parameter may have different values. In two pieces of gap measurement configuration information, at least one configuration parameter has different values.

When gap measurement configuration information carried in measurement configuration information delivered by the network side includes at least two types of gap measurement configuration information, measuring, by the UE, a carrier according to the measurement configuration message includes: determining, by the UE according to an indication message sent by the network side, to use first gap measurement configuration information or second gap measurement configuration information to measure a carrier.

Specifically, the determining, by the UE according to an indication message sent by the network side, to use first gap measurement configuration information or second gap measurement configuration information to measure a carrier includes:
receiving, by the UE, a gap measurement mode identifier that is delivered by the network side by using MAC signaling or PDCCH signaling, where
the gap measurement mode identifier corresponds to one type of gap measurement configuration information (the first gap measurement configuration information or the second gap measurement configuration information); and
measuring, by the UE, multiple carriers according to the gap measurement configuration information that corresponds to the gap measurement mode identifier.

Optionally, the gap measurement configuration information includes at least gap duration information. Preferably, the gap duration information includes 10 milliseconds, 11 milliseconds, or 12 milliseconds.

When the gap measurement configuration information includes at least gap duration information, and the gap duration information includes 10 milliseconds, 11 milliseconds, or 12 milliseconds, the measuring, by the UE, a carrier according to the measurement configuration message includes: measuring, by the UE, at least two carriers in a gap indicated by the gap duration information.

Currently, in the existing gap measurement manner, one candidate carrier may be measured in each period. If multiple carriers need to be measured, apparently, the UE needs to take a relatively long time to perform carrier measurement, and after the measurement, an already measured candidate carrier may have already changed. This reduces carrier aggregation efficiency of the UE. By means of setting the gap duration information to 10 milliseconds, 11 milliseconds, or 12 milliseconds, the UE can measure at least two carriers in one gap, and when consecutively measuring carriers, the UE can directly jump from measurement of a carrier whose frequency is P1 to measurement of a carrier whose frequency is P2. In this way, a process of returning to an operating frequency is reduced, that is, in one gap measurement period, at least two carriers can be measured. Compared with the prior art in which only one carrier can be measured in one gap measurement period, carrier measurement efficiency of the UE is improved.

Optionally, before step 101 is performed, the method further includes:
sending, by the UE, a measurement capability message to the network side, where the measurement capability message includes small gap-based measurement capability information and/or gap-based measurement capability information of the UE, so that the network side delivers, according to the received small gap-based measurement capability information, or a combination of the small gap-based measurement capability information and the gap-based measurement capability information, measurement configuration information carrying the small gap measurement configuration information to the UE, and the network side delivers, according to reported gap-based policy capability information, or a combination of the small gap-based measurement capability information and the gap-based measurement capability information, measurement configuration information carrying the small gap measurement configuration information to the UE.

Step 102: The UE measures a carrier according to the received measurement configuration message.

Specifically, the UE measures multiple carriers according to the received measurement configuration message that carries values of configuration parameters in the gap measurement configuration information or the small gap measurement configuration information.

Specifically, before Step 101, the sending, by the UE, a measurement capability message to the network side includes:
reporting, by the UE by using Radio Resource Control (Radio Resource Control, RRC) signaling, the measurement capability information in the UE that includes the small gap-based measurement capability information and/or the gap-based measurement capability information to the network side.

When the UE has both a small gap measurement capability and a gap measurement capability, the UE may separately report the small gap-based measurement capability information and the gap-based measurement capability information to the network side. When configuration parameters in the small gap-based measurement capability information and the gap-based measurement capability information are the same, and values of the configuration parameters are the same, a piece of general measurement capability information may be jointly used. In this way, signaling consumption can be reduced, and working efficiency of the UE can be improved.

The small gap-based measurement capability information may include any one or a combination of the following: a small gap measurement period; a small gap measurement quantity; small gap duration; an offset offset value; or a length of a time interval between two adjacent small gaps.

Specifically, the gap-based measurement capability information may include any one or a combination of the following: a gap measurement period; a gap measurement quantity; gap duration; an offset offset value; or a length of a time interval between two adjacent gaps.

Specifically, the small gap-based measurement capability information may include at least one working carrier aggregation manner, and small gap measurement indication information of each working carrier aggregation manner, or at least one or a combination of the following corresponding to each working carrier aggregation manner: small gap measurement indication information of at least one carrier, small gap measurement indication information of at least one measurement carrier aggregation manner, small gap measurement indication information of at least one frequency band, or small gap measurement indication information of at least one frequency band combination; or
the small gap-based measurement capability information may include: at least one operating band combination manner, and small gap measurement indication information of each operating band combination manner, or at least one or a combination of the following corresponding to each operating band combination manner: small gap measurement indication information of at least one carrier, small gap measurement indication information of at least one measurement carrier aggregation manner, small gap measurement indication information of at least one frequency band, or small gap measurement indication information of at least one frequency band combination; or
the gap-based measurement capability information includes: at least one working carrier aggregation manner, and gap measurement indication information of each working carrier aggregation manner, or at least one or a combination of the following corresponding to each working carrier aggregation manner: gap measurement indication information of at least one carrier, gap measurement indication information of at least one measurement carrier aggregation manner, gap measurement indication information of at least one frequency band, or gap measurement indication information of at least one frequency band combination; or
the gap-based measurement capability information includes: at least one operating band combination manner, and gap measurement indication information of each operating band combination manner, or at least one or a combination of the following corresponding to each operating band combination manner: gap measurement indication information of at least one carrier, gap measurement indication information of at least one measurement carrier aggregation manner, gap measurement indication information of at least one frequency band, or gap measurement indication information of at least one frequency band combination.

Specifically, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Specifically, gap measurement indication information or small gap measurement indication information of any carrier that corresponds to any working carrier aggregation manner is used to indicate whether a gap or a small gap is needed, when the UE works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band.

Gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the UE works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination.

Gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner.

Gap measurement indication information or small gap measurement indication information of any operating band combination manner is used to indicate whether a gap or a small gap is needed, when the UE works in any operating band combination manner, for measuring any carrier or any measurement carrier aggregation manner.

Usually, there are the following carrier aggregation manners: an in-band adjacent carrier aggregation manner, an in-band non-adjacent carrier aggregation manner, and a cross-band non-adjacent carrier aggregation manner. Specifically, the carrier aggregation manner may be indicated by using a frequency band combination. For each frequency band in the frequency band combination, a frequency band level is defined. For example, in a definition, in a frequency band A, B, or C, the UE supports a configuration of a carrier having a bandwidth less than 100 physical resource blocks (Physical Resource Block, PRB), and a corresponding frequency band level is X. In a frequency band D, a configuration of two carriers having a total bandwidth less than 200 PRBs is supported, and a corresponding frequency band level is Y. That is, in the frequency band D, the UE may use two carriers for aggregation. A carrier aggregation manner A+D indicates that the UE may perform carrier aggregation by using three carriers in total: one carrier in the frequency band A and two carriers in the frequency D. Certainly, the carrier aggregation manner may further be indicated by directly using a specific carrier. For example, F1 indicates a carrier 1, F2 indicates a carrier 2, and F1+F2 indicates carrier aggregation of the carrier 1 and the carrier 2.

In an example 1, when the small gap-based measurement capability information includes at least one working carrier aggregation manner and small gap measurement indication information of at least one frequency band that corresponds to each working carrier aggregation manner, as shown in Table 1, A, B, C, D separately indicate four frequency bands, and "Yes/No" indicates that a value of the small gap measurement indication information is "Yes" or "No". When the value is Yes, it indicates that small gap measurement is needed. When the value is No, it indicates that small gap measurement is not needed.

**Table 1 An example of small gap-based measurement capability information**

| Working carrier aggregation manner | Small gap measurement indication information | | | |
|---|---|---|---|---|
| | A | B | C | D |
| In-band adjacent carrier aggregation manner | Yes/No | Yes/No | Yes/No | Yes/No |
| (For example, AA, AAA...) | | | | |
| In-band non-adjacent carrier aggregation manner | Yes/No | Yes/No | Yes/No | Yes/No |
| (For example, A+A) | | | | |
| Cross-band non-adjacent carrier aggregation manner | Yes/No | Yes/No | Yes/No | Yes/No |
| (For example, A+B, AA+B, A+BB...) | | | | |
| Cross-band non-adjacent carrier aggregation manner | Yes/No | Yes/No | Yes/No | Yes/No |
| (For example, C+D) | | | | |

In an example 2, when the small gap-based measurement capability information includes at least one working carrier aggregation manner and small gap measurement indication information of at least one frequency band combination that corresponds to each working carrier aggregation manner, as shown in Table 2, A, B, C, D separately indicate four frequency bands, A+B and C+D indicate frequency band combinations, and "Yes/No" indicates that a value of the small gap measurement indication information is "Yes" or "No". When the value is Yes, it indicates that small gap measurement is needed. When the value is No, it indicates that small gap measurement is not needed.

**Table 2 An example of small gap-based measurement capability information**

| Working carrier aggregation manner | Small gap measurement indication information | | | |
|---|---|---|---|---|
| | A+B | B | C+D | D |
| In-band adjacent carrier aggregation manner | Yes/No | Yes/No | Yes/No | Yes/No |
| (For example, AA, AAA...) | | | | |
| In-band non-adjacent carrier aggregation manner | Yes/No | Yes/No | Yes/No | Yes/No |
| (For example, A+A) | | | | |
| Cross-band non-adjacent carrier aggregation manner | Yes/No | Yes/No | Yes/No | Yes/No |
| (For example, A+B, AA+B, A+BB...) | | | | |
| Cross-band non-adjacent carrier aggregation manner | Yes/No | Yes/No | Yes/No | Yes/No |
| (For example, C+D) | | | | |

In an example 3, when the small gap-based measurement capability information includes at least one working carrier aggregation manner and small gap measurement indication information of each working carrier aggregation manner, as shown in Table 3, "Yes/No" indicates the same as described above.

**Table 3 An example of small gap-based measurement capability information**

| Working carrier aggregation manner | Small gap measurement indication information |
|---|---|
| In-band adjacent carrier aggregation manner | Yes/No |
| (For example, AA, AAA...) | |
| In-band non-adjacent carrier aggregation manner | Yes/No |
| (For example, A+A) | |
| Cross-band non-adjacent carrier aggregation manner | Yes/No |
| (For example, A+B, AA+B, A+BB...) | |
| Cross-band non-adjacent carrier aggregation manner | Yes/No |
| (For example, C+D) | |

In an example 4, when the small gap-based measurement capability information includes at least one working carrier aggregation manner and small gap measurement indication information of at least one measurement carrier aggregation manner that corresponds to each working carrier aggregation manner, as shown in Table 4, "Yes/No" indicates the same as described above.

**Table 4 An example of small gap-based measurement capability information**

| Working carrier aggregation manner | Small gap measurement indication information | | | |
|---|---|---|---|---|
| | In-band adjacent carrier aggregation manner | In-band non-adjacent carrier aggregation manner | Cross-band non-adjacent carrier aggregation manner | Cross-band non-adjacent carrier aggregation manner |
| | (For example, AA, AAA...) | (For example, A+A) | (For example, A+B, AA+B, A+BB...) | (For example, C+D) |
| In-band adjacent carrier aggregation manner | Yes/No | Yes/No | Yes/No | Yes/No |
| (For example, AA, AAA...) | | | | |
| In-band non-adjacent carrier aggregation manner | Yes/No | Yes/No | Yes/No | Yes/No |
| (For example, A+A) | | | | |
| Cross-band non-adjacent carrier aggregation manner | Yes/No | **[00100]** Yes/No | **[00101]** Yes/No | **[00102]** Yes/No |
| (For example, A+B, AA+B, A+BB...) | | | | |
| **[00103]** Cross -band non-adjacent carrier aggregation manner | **[00105]** Yes/No | **[00106]** Yes/No | **[00107]** Yes/No | **[00108]** Yes/No |
| **[00104]** (For example, C+D) | | | | |

In an example 5, when the small gap-based measurement capability information includes at least one operating band combination manner and small gap measurement indication information of at least one frequency band combination that corresponds to each operating band combination manner, as shown in Table 5, "Yes/No" indicates the same as described above.

**Table 5 An example of small gap-based measurement capability information**

| **[00109]** Operating band combination manner | **[00110] Small gap measurement indication information** | | | |
|---|---|---|---|---|
| | A+B | B+C | C | C+D |
| A+B | Yes/No | Yes/No | Yes/No | Yes/No |
| B+C | Yes/No | Yes/No | Yes/No | Yes/No |
| C+D | Yes/No | Yes/No | Yes/No | Yes/No |
| D | Yes/No | Yes/No | Yes/No | Yes/No |

In an example 6, when the small gap-based measurement capability information includes at least one operating band combination manner and small gap measurement indication information of at least one carrier aggregation manner that corresponds to each operating band combination manner, as shown in Table 6, "Yes/No" indicates the same as described above.

**Table 6 An example of small gap-based measurement capability information**

| Operating band combination manner | Small gap measurement indication information | | | |
|---|---|---|---|---|
| | In-band adjacent carrier aggregation manner | In-band non-adjacent carrier aggregation manner | Cross-band non-adjacent carrier aggregation manner | Cross-band non-adjacent carrier aggregation manner |
| A+B | Yes/No | Yes/No | Yes/No | Yes/No |
| B+C | Yes/No | Yes/No | Yes/No | Yes/No |
| C+D | Yes/No | Yes/No | Yes/No | Yes/No |
| D | Yes/No | Yes/No | Yes/No | Yes/No |

Information included in the gap-based measurement capability information is similar to information included in the small gap-based measurement capability information. This is similar to the example 1 to the example 6. Details are not described herein again.

In this way, UE reports gap-based measurement capability information or small gap-based measurement capability information of the UE to a network side, so that the network side delivers gap measurement configuration information or small gap measurement configuration information according to the reported configuration information, and the network side can perform measurement configuration according to a configuration and measurement capability of the UE, thereby improving applicability of delivery and configuration.

Based on the foregoing embodiment, an embodiment of the present invention further provides a multi-carrier measurement configuration method, applied to a base station. Referring to FIG. 2, a specific processing procedure of the method includes the following steps.

Step 201: A network side receives a measurement capability message sent by user equipment UE, where the measurement capability message includes small-based measurement capability information and/or gap-based measurement capability information of the UE.

Specifically, the receiving, by a network side, a measurement capability message sent by UE includes:
receiving, by the network side by using RRC signaling, the measurement capability message sent by the UE.

The small gap-based measurement capability information includes any one or a combination of the following:
a small gap measurement period, a small gap measurement quantity, small gap duration, an offset offset value, or a length of a time interval between two adjacent small gaps.

The gap-based measurement capability information includes any one or a combination of the following:
a gap measurement period, a gap measurement quantity, gap duration, an offset offset value, or a length of a time interval between two adjacent gaps.

Optionally, the small gap-based measurement capability information includes at least one working carrier aggregation manner, and small gap measurement indication information of each working carrier aggregation manner, or at least one or a combination of the following corresponding to each working carrier aggregation manner: small gap measurement indication information of at least one carrier, small gap measurement indication information of at least one measurement carrier aggregation manner, small gap measurement indication information of at least one frequency band, or small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner: small gap measurement indication information of at least one carrier, small gap measurement indication information of at least one measurement carrier aggregation manner, small gap measurement indication information of at least one frequency band, or small gap measurement indication information of at least one frequency band combination; or
the gap-based measurement capability information includes: at least one working carrier aggregation manner, and gap measurement indication information of each working carrier aggregation manner, or at least one or a combination of the following corresponding to each working carrier aggregation manner: gap measurement indication information of at least one carrier, gap measurement indication information of at least one measurement carrier aggregation manner, gap measurement indication information of at least one frequency band, or gap measurement indication information of at least one frequency band combination; or
the gap-based measurement capability information includes: at least one operating band combination manner, and gap measurement indication information of each operating band combination manner, or at least one or a combination of the following corresponding to each operating band combination manner: gap measurement indication information of at least one carrier, gap measurement indication information of at least one measurement carrier aggregation manner, gap measurement indication information of at least one frequency band, or gap measurement indication information of at least one frequency band combination.

Specifically, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Gap measurement indication information or small gap measurement indication information of any carrier that corresponds to any working carrier aggregation manner is used to indicate whether a gap or a small gap is needed, when the UE works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band.

Gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the UE works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination.

Gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner.

Gap measurement indication information or small gap measurement indication information of any operating band combination manner is used to indicate whether a gap or a small gap is needed, when the UE works in any operating band combination manner, for measuring any carrier or any measurement carrier aggregation manner.

Step 202: The network side sends a measurement configuration message to the UE according to the measurement capability message, where the measurement configuration message includes gap gap measurement configuration information and/or small gap small gap measurement configuration information, so that the UE measures a carrier according to the measurement configuration message.

Specifically, the sending, by the network side, a measurement configuration message to the UE includes:
sending, by the network side, the measurement configuration message to the UE by using MAC signaling or PDCCH signaling or RRC signaling.

The small gap measurement configuration information includes any one or a combination of the following:
a small gap measurement period, a small gap measurement quantity, small gap duration, an offset offset value, or a length of a time interval between two adjacent small gaps.

Optionally, the small gap measurement configuration information includes three consecutive small gaps, so that a radio frequency link of the UE consecutively measures two carriers according to the three consecutive small gaps.

Optionally, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

When the gap measurement configuration information includes at least the first gap measurement configuration information and the second gap measurement configuration information, after the sending, by the network side, a measurement configuration message to the UE, the method further includes:
sending, by the network side, an indication message to the UE, so that the UE determines, according to the indication message sent by the network side, to use the first gap measurement configuration information or the second gap measurement configuration information to measure a carrier.

Optionally, the gap measurement configuration information includes gap duration information, and the gap duration information includes 10 milliseconds, 11 milliseconds, or 12 milliseconds, so that the UE measures at least two carriers in a gap indicated by the gap duration information.

By means of the multi-carrier measurement configuration method provided in this embodiment of the present invention, UE reports gap-based measurement capability information or small gap-based measurement capability information of the UE to a network side, so that the network side delivers gap measurement configuration information or small gap measurement configuration information according to the reported configuration information, and the network side can perform measurement configuration according to a configuration and measurement capability of the UE, thereby improving applicability of delivery and configuration.

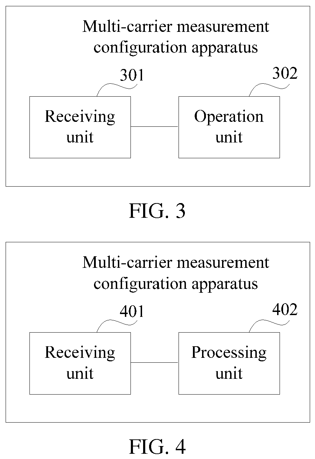

Based on the foregoing embodiments, the present invention further provides a multi-carrier measurement configuration apparatus on a UE side. Referring to FIG. 3, the apparatus includes a receiving unit 301 and an operation unit 302, where
the receiving unit 301 is configured to receive a measurement configuration message sent by a network side, where the measurement configuration message includes gap gap measurement configuration information and/or small gap small gap measurement configuration information; and
the operation unit 302 is configured to measure a carrier according to the measurement configuration message.

Optionally, the receiving unit 301 is specifically configured to:
receive, by using Media Access Control MAC signaling or physical downlink control channel PDCCH signaling or Radio Resource Control RRC signaling, the measurement configuration message sent by the network side.

Optionally, the small gap measurement configuration information includes any one or a combination of the following:
a small gap measurement period, a small gap measurement quantity, small gap duration, an offset offset value, or a length of a time interval between two adjacent small gaps.

Optionally, the small gap measurement configuration information includes three consecutive small gaps; and
a radio frequency link of the UE consecutively measures two carriers according to the three consecutive small gaps.

Optionally, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

The operation unit 302 determines, according to an indication message sent by the network side, to use the first gap measurement configuration information or the second gap measurement configuration information to measure a carrier.

Optionally, the gap measurement configuration information includes gap duration information, and the gap duration information includes 10 milliseconds, 11 milliseconds, or 12 milliseconds.

Optionally, the operation unit 302 is specifically configured to:
measure at least two carriers in a gap indicated by the gap duration information.

Optionally, the multi-carrier measurement configuration apparatus further includes:
a sending unit 303, configured to: before the receiving unit 301 receives the measurement configuration message, send a measurement capability message to the network side, where the measurement capability message includes small-based measurement capability information and/or gap-based measurement capability information of the UE.

The sending unit 303 is specifically configured to:
send the measurement capability message to the network side by using Radio Resource Control RRC signaling.

Optionally, the small gap-based measurement capability information includes any one or a combination of the following:
a small gap measurement period;
a small gap measurement quantity;
small gap duration;
an offset offset value; or
a length of a time interval between two adjacent small gaps.

Optionally, the gap-based measurement capability information includes any one or a combination of the following:
a gap measurement period;
a gap measurement quantity;
gap duration;
an offset offset value; or
a length of a time interval between two adjacent gaps.

Optionally, the small gap-based measurement capability information includes at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner:
   small gap measurement indication information of at least one carrier,
   small gap measurement indication information of at least one measurement carrier aggregation manner,
   small gap measurement indication information of at least one frequency band, or
   small gap measurement indication information of at least one frequency band combination; or
   the gap-based measurement capability information includes: at least one working carrier aggregation manner, and gap measurement indication information of each working carrier aggregation manner, or at least one or a combination of the following corresponding to each working carrier aggregation manner:
      gap measurement indication information of at least one carrier,
      gap measurement indication information of at least one measurement carrier aggregation manner,
      gap measurement indication information of at least one frequency band, or
      gap measurement indication information of at least one frequency band combination; or
      the gap-based measurement capability information includes: at least one operating band combination manner, and gap measurement indication information of each operating band combination manner, or at least one or a combination of the following corresponding to each operating band combination manner:
         gap measurement indication information of at least one carrier,
         gap measurement indication information of at least one measurement carrier aggregation manner,
         gap measurement indication information of at least one frequency band, or
         gap measurement indication information of at least one frequency band combination.

Optionally, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Optionally, gap measurement indication information or small gap measurement indication information of any carrier that corresponds to any working carrier aggregation manner is used to indicate whether a gap or a small gap is needed, when the multi-carrier measurement configuration works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the multi-carrier measurement configuration works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the multi-carrier measurement configuration works in any working carrier aggregation manner, for measuring any carrier in any frequency band or any measurement carrier aggregation manner.

Gap measurement indication information or small gap measurement indication information of any frequency band combination that corresponds to any working carrier aggregation manner is used to indicate whether a gap or a small gap is needed, when the multi-carrier measurement configuration works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the multi-carrier measurement configuration works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the multi-carrier measurement configuration works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the multi-carrier measurement configuration works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the multi-carrier measurement configuration works in any operating band combination manner, for measuring any carrier aggregation manner in the one frequency band combination.

Gap measurement indication information or small gap measurement indication information of any working carrier aggregation manner is used to indicate whether a gap or a small gap is needed, when the multi-carrier measurement configuration works in any working carrier aggregation manner, for measuring any carrier or any measurement carrier aggregation manner.

Gap measurement indication information or small gap measurement indication information of any operating band combination manner is used to indicate whether a gap or a small gap is needed, when the multi-carrier measurement configuration works in any operating band combination manner, for measuring any carrier or any measurement carrier aggregation manner.

By means of the multi-carrier measurement configuration apparatus provided in this embodiment of the present invention, a measurement configuration message that is sent by a network side and that includes gap measurement configuration information or small gap measurement configuration information is received, and multiple carriers are measured according to the measurement configuration message, so as to implement configuration of a carrier measurement manner by the network side, thereby improving applicability of carrier measurement, and improving carrier aggregation efficiency of the multi-carrier measurement configuration apparatus.

Based on the foregoing embodiments, the present invention further provides a multi-carrier measurement configuration apparatus on a network side. Referring to FIG. 4, the apparatus includes a receiving unit 401 and a processing unit 402, where
the receiving unit 401 is configured to receive a measurement capability message sent by user equipment UE, where the measurement capability message includes small-based measurement capability information and/or gap-based measurement capability information of the UE; and
the processing unit 402 is configured to send a measurement configuration message to the UE according to the measurement capability message, where the measurement configuration message includes gap gap measurement configuration information and/or small gap small gap measurement configuration information, so that the UE measures a carrier according to the measurement configuration message.

Optionally, the receiving unit 401 is specifically configured to:
receive, by using Radio Resource Control RRC signaling, the measurement capability message sent by the UE.

Optionally, the small gap-based measurement capability information includes any one or a combination of the following:
a small gap measurement period;
a small gap measurement quantity;
small gap duration;
an offset offset value; or
a length of a time interval between two adjacent small gaps.

Optionally, the gap-based measurement capability information includes any one or a combination of the following:
a gap measurement period;
a gap measurement quantity;
gap duration;
an offset offset value; or
a length of a time interval between two adjacent gaps.

Optionally, the small gap-based measurement capability information includes at least one working carrier aggregation manner, and small gap measurement indication information of each working carrier aggregation manner, or at least one or a combination of the following corresponding to each working carrier aggregation manner: small gap measurement indication information of at least one carrier, small gap measurement indication information of at least one measurement carrier aggregation manner, small gap measurement indication information of at least one frequency band, or small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner: small gap measurement indication information of at least one carrier, small gap measurement indication information of at least one measurement carrier aggregation manner, small gap measurement indication information of at least one frequency band, or small gap measurement indication information of at least one frequency band combination; or
the gap-based measurement capability information includes: at least one working carrier aggregation manner, and gap measurement indication information of each working carrier aggregation manner, or at least one or a combination of the following corresponding to each working carrier aggregation manner: gap measurement indication information of at least one carrier, gap measurement indication information of at least one measurement carrier aggregation manner, gap measurement indication information of at least one frequency band, or gap measurement indication information of at least one frequency band combination; or
the gap-based measurement capability information includes: at least one operating band combination manner, and gap measurement indication information of each operating band combination manner, or at least one or a combination of the following corresponding to each operating band combination manner: gap measurement indication information of at least one carrier, gap measurement indication information of at least one measurement carrier aggregation manner, gap measurement indication information of at least one frequency band, or gap measurement indication information of at least one frequency band combination.

Optionally, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Optionally, gap measurement indication information or small gap measurement indication information of any carrier that corresponds to any working carrier aggregation manner is used to indicate whether a gap or a small gap is needed, when the UE works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band.

Gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the UE works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination.

Gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner.

Gap measurement indication information or small gap measurement indication information of any operating band combination manner is used to indicate whether a gap or a small gap is needed, when the UE works in any operating band combination manner, for measuring any carrier or any measurement carrier aggregation manner.

Optionally, the processing unit 402 is specifically configured to:
send the measurement configuration message to the UE by using Media Access Control MAC signaling or physical downlink control channel PDCCH signaling or Radio Resource Control RRC signaling.

Optionally, the small gap measurement configuration information includes any one or a combination of the following:
a small gap measurement period, a small gap measurement quantity, small gap duration, an offset offset value, or a length of a time interval between two adjacent small gaps.

Optionally, the small gap measurement configuration information includes three consecutive small gaps, so that a radio frequency link of the UE consecutively measures two carriers according to the three consecutive small gaps.

Optionally, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

Optionally, the processing unit 402 is further configured to:
after the network side sends the measurement configuration message to the UE, send an indication message to the UE, so that the UE determines, according to the indication message sent by the network side, to use the first gap measurement configuration information or the second gap measurement configuration information to measure a carrier.

Optionally, the gap measurement configuration information includes gap duration information, and the gap duration information includes 10 milliseconds, 11 milliseconds, or 12 milliseconds, so that the UE measures at least two carriers in a gap indicated by the gap duration information.

By means of the multi-carrier measurement configuration apparatus provided in this embodiment of the present invention, UE reports gap-based measurement capability information or small gap-based measurement capability information of the UE to a network side, so that the network side delivers gap measurement configuration information or small gap measurement configuration information according to the reported configuration information, and the network side can perform measurement configuration according to a configuration and measurement capability of the UE, thereby improving applicability of delivery and configuration.

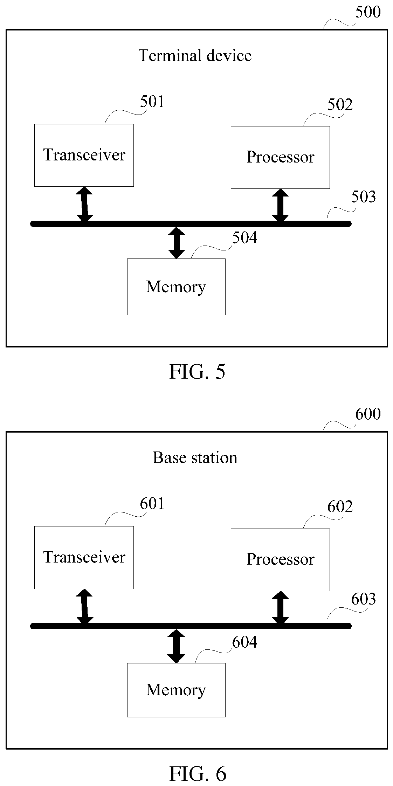

Based on the foregoing embodiments, an embodiment of the present invention further provides a terminal device 500. Referring to FIG. 5, the terminal device 500 includes a transceiver 501, a processor 502, a bus 503, and a memory 504.

The transceiver 501, the processor 502, and the memory 504 are connected to each other by using the bus 503. The bus 503 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only a bold line is used for representation in FIG. 5, but it does not represent that there is only one bus or one type of bus.

The transceiver 501 is configured to receive a measurement configuration message sent by a network, or send a measurement capability message to a network side, or the like.

The processor 502 is configured to implement the multi-carrier measurement configuration method shown in FIG. 1 of the embodiments of the present invention, including:
receiving a measurement configuration message sent by the network side, where the measurement configuration message includes gap gap measurement configuration information and/or small gap small gap measurement configuration information; and
measuring a carrier according to the received measurement configuration message.

Optionally, the receiving a measurement configuration message sent by the network side includes:
receiving, by using Media Access Control MAC signaling or physical downlink control channel PDCCH signaling or Radio Resource Control RRC signaling, the measurement configuration message sent by the network side.

Optionally, the small gap measurement configuration information includes any one or a combination of the following:
a small gap measurement period, a small gap measurement quantity, small gap duration, an offset offset value, or a length of a time interval between two adjacent small gaps.

Optionally, the small gap measurement configuration information includes three consecutive small gaps; and
a radio frequency link of the processor 502 consecutively measures two carriers according to the three consecutive small gaps.

Optionally, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

The processor 502 determines, according to an indication message sent by the network side, to use the first gap measurement configuration information or the second gap measurement configuration information to measure a carrier.

Optionally, the gap measurement configuration information includes gap duration information, and the gap duration information includes 10 milliseconds, 11 milliseconds, or 12 milliseconds.

The processor 502 measures at least two carriers in a gap indicated by the gap duration information.

Optionally, before the measurement configuration message is received, the following is further included:
sending a measurement capability message to the network side, where the measurement capability message includes small-based measurement capability information and/or gap-based measurement capability information of the UE.

Specifically, the sending a measurement capability message to the network side includes:
sending the measurement capability message to the network side by using Radio Resource Control RRC signaling.

Optionally, the small gap-based measurement capability information includes any one or a combination of the following:
a small gap measurement period, a small gap measurement quantity, small gap duration, an offset offset value, or a length of a time interval between two adjacent small gaps.

Optionally, the gap-based measurement capability information includes any one or a combination of the following:
a gap measurement period, a gap measurement quantity, gap duration, an offset offset value, or a length of a time interval between two adjacent gaps.

Optionally, the small gap-based measurement capability information includes at least one working carrier aggregation manner, and small gap measurement indication information of each working carrier aggregation manner, or at least one or a combination of the following corresponding to each working carrier aggregation manner: small gap measurement indication information of at least one carrier, small gap measurement indication information of at least one measurement carrier aggregation manner, small gap measurement indication information of at least one frequency band, or small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner: small gap measurement indication information of at least one carrier, small gap measurement indication information of at least one measurement carrier aggregation manner, small gap measurement indication information of at least one frequency band, or small gap measurement indication information of at least one frequency band combination; or
the gap-based measurement capability information includes: at least one working carrier aggregation manner, and gap measurement indication information of each working carrier aggregation manner, or at least one or a combination of the following corresponding to each working carrier aggregation manner: gap measurement indication information of at least one carrier, gap measurement indication information of at least one measurement carrier aggregation manner, gap measurement indication information of at least one frequency band, or gap measurement indication information of at least one frequency band combination; or
the gap-based measurement capability information includes: at least one operating band combination manner, and gap measurement indication information of each operating band combination manner, or at least one or a combination of the following corresponding to each operating band combination manner: gap measurement indication information of at least one carrier, gap measurement indication information of at least one measurement carrier aggregation manner, gap measurement indication information of at least one frequency band, or gap measurement indication information of at least one frequency band combination.

Optionally, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Optionally, gap measurement indication information or small gap measurement indication information of any carrier that corresponds to any working carrier aggregation manner is used to indicate whether a gap or a small gap is needed, when the terminal device 500 works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the terminal device 500 works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the terminal device 500 works in any working carrier aggregation manner, for measuring any carrier or any measurement carrier aggregation manner in any frequency band.

Gap measurement indication information or small gap measurement indication information of any frequency band combination that corresponds to any working carrier aggregation manner is used to indicate whether a gap or a small gap is needed, when the terminal device 500 works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the terminal device 500 works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the terminal device 500 works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the terminal device 500 works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the terminal device 500 works in any operating band combination manner, for measuring any carrier aggregation manner in the one frequency band combination.

Gap measurement indication information or small gap measurement indication information of any working carrier aggregation manner is used to indicate whether a gap or a small gap is needed, when the terminal device 500 works in any working carrier aggregation manner, for measuring any carrier or any measurement carrier aggregation manner.

Gap measurement indication information or small gap measurement indication information of any operating band combination manner is used to indicate whether a gap or a small gap is needed, when the terminal device 500 works in any operating band combination manner, for measuring any carrier or any measurement carrier aggregation manner.

The terminal device 500 further includes the memory 504, configured to store a program, or the like. Specifically, the program may include program code, and the program code includes a computer operation instruction. The memory 504 may include a random access memory (random access memory, RAM), or may further include a non-volatile memory (non-volatile memory), for example, at least one magnetic disk storage. The processor 502 executes an application program stored in the memory 504, to implement the foregoing multi-carrier measurement configuration method.

By means of the terminal device provided in this embodiment of the present invention, a measurement configuration message that is sent by a network side and that includes gap measurement configuration information or small gap measurement configuration information is received, and multiple carriers are measured according to the measurement configuration message, so as to implement configuration of a carrier measurement manner by the network side, thereby improving applicability of carrier measurement, and improving carrier aggregation efficiency of the multi-carrier measurement configuration apparatus.

Based on the foregoing embodiments, an embodiment of the present invention further provides a base station 600. Referring to FIG. 6, the terminal device 600 includes a transceiver 601, a processor 602, a bus 603, and a memory 604.

The transceiver 601, the processor 602, and the memory 604 are connected to each other by using the bus 603. The bus 603 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only a bold line is used for representation in FIG. 6, but it does not represent that there is only one bus or one type of bus.

The transceiver 601 is configured to receive a measurement configuration message sent by a network, or send a measurement capability message to a network side, or the like.

The processor 602 is configured to implement the multi-carrier measurement configuration method shown in FIG. 2 of the embodiments of the present invention, including:
receiving a measurement capability message sent by UE, where the measurement capability message includes small-based measurement capability information and/or gap-based measurement capability information of the UE; and
sending a measurement configuration message to the UE according to the measurement capability message, where the measurement configuration message includes gap gap measurement configuration information and/or small gap small gap measurement configuration information, so that the UE measures a carrier according to the measurement configuration message.

Specifically, the receiving a measurement capability message sent by UE includes:
receiving, by the network side by using Radio Resource Control RRC signaling, the measurement capability message sent by the UE.

Optionally, the small gap-based measurement capability information includes any one or a combination of the following:
a small gap measurement period, a small gap measurement quantity, small gap duration, an offset offset value, or a length of a time interval between two adjacent small gaps.

Optionally, the gap-based measurement capability information includes any one or a combination of the following:
a gap measurement period, a gap measurement quantity, gap duration, an offset offset value, or a length of a time interval between two adjacent gaps.

Optionally, the small gap-based measurement capability information includes at least one working carrier aggregation manner, and small gap measurement indication information of each working carrier aggregation manner, or at least one or a combination of the following corresponding to each working carrier aggregation manner: small gap measurement indication information of at least one carrier, small gap measurement indication information of at least one measurement carrier aggregation manner, small gap measurement indication information of at least one frequency band, or small gap measurement indication information of at least one frequency band combination; or
the small gap-based measurement capability information includes: at least one operating band combination manner, and small gap measurement indication information of each operating band combination manner, or at least one or a combination of the following corresponding to each operating band combination manner: small gap measurement indication information of at least one carrier, small gap measurement indication information of at least one measurement carrier aggregation manner, small gap measurement indication information of at least one frequency band, or small gap measurement indication information of at least one frequency band combination; or
the gap-based measurement capability information includes: at least one working carrier aggregation manner, and gap measurement indication information of each working carrier aggregation manner, or at least one or a combination of the following corresponding to each working carrier aggregation manner: gap measurement indication information of at least one carrier, gap measurement indication information of at least one measurement carrier aggregation manner, gap measurement indication information of at least one frequency band, or gap measurement indication information of at least one frequency band combination; or
the gap-based measurement capability information includes: at least one operating band combination manner, and gap measurement indication information of each operating band combination manner, or at least one or a combination of the following corresponding to each operating band combination manner: gap measurement indication information of at least one carrier, gap measurement indication information of at least one measurement carrier aggregation manner, gap measurement indication information of at least one frequency band, or gap measurement indication information of at least one frequency band combination.

Optionally, the working carrier aggregation manner and/or the measurement carrier aggregation manner includes: an in-band adjacent carrier aggregation manner, an in-band non-adjacent carrier aggregation manner, or a cross-band non-adjacent carrier aggregation manner, where a frequency band combination includes at least one frequency band.

Optionally, gap measurement indication information or small gap measurement indication information of any carrier that corresponds to any working carrier aggregation manner is used to indicate whether a gap or a small gap is needed, when the UE works in any working carrier aggregation manner, for measuring any carrier.

Gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner.

Gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band.

Gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination.

Gap measurement indication information or small gap measurement indication information of any carrier that corresponds to any operating band combination manner is used to indicate whether a gap or a small gap is needed, when the UE works in any operating band combination manner, for measuring any carrier.

Gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner.

Gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band.

Gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination.

Gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner.

Gap measurement indication information or small gap measurement indication information of any operating band combination manner is used to indicate whether a gap or a small gap is needed, when the UE works in any operating band combination manner, for measuring any carrier or any measurement carrier aggregation manner.

Optionally, the sending a measurement configuration message to the UE includes:
sending the measurement configuration message to the UE by using Media Access Control MAC signaling or physical downlink control channel PDCCH signaling or Radio Resource Control RRC signaling.

Optionally, the small gap measurement configuration information includes any one or a combination of the following:
a small gap measurement period, a small gap measurement quantity, small gap duration, an offset offset value, or a length of a time interval between two adjacent small gaps.

Optionally, the small gap measurement configuration information includes three consecutive small gaps, so that a radio frequency link of the UE consecutively measures two carriers according to the three consecutive small gaps.

Optionally, the gap measurement configuration information includes at least first gap measurement configuration information and second gap measurement configuration information, where each piece of gap measurement configuration information includes one or a combination of the following:
a gap measurement period, a gap measurement quantity, gap duration, an offset offset value, or a length of a time interval between two adjacent gaps.

Optionally, after the sending, by the network side, a measurement configuration message to the UE, the method further includes:
sending an indication message to the UE, so that the UE determines, according to the indication message sent by the network side, to use the first gap measurement configuration information or the second gap measurement configuration information to measure a carrier.

Optionally, the gap measurement configuration information includes gap duration information, and the gap duration information includes 10 milliseconds, 11 milliseconds, or 12 milliseconds, so that the UE measures at least two carriers in a gap indicated by the gap duration information.

The terminal device 600 further includes the memory 604, configured to store a program, or the like. Specifically, the program may include program code, and the program code includes a computer operation instruction. The memory 604 may include a random access memory (random access memory, RAM), or may further include a non-volatile memory (non-volatile memory), for example, at least one magnetic disk storage. The processor 602 executes an application program stored in the memory 604, to implement the foregoing multi-carrier measurement configuration method.

By means of the base station provided in this embodiment of the present invention, the base station receives gap-based measurement capability information or small gap-based measurement capability information of UE that is reported by the UE, and delivers gap measurement configuration information or small gap measurement configuration information according to the reported configuration information, so that the base station can perform measurement configuration according to a configuration and measurement capability of the UE, thereby improving applicability of delivery and configuration.

Spectrum management is a spectrum planning method established for effectively using a radio frequency. In current spectrum management, a spectrum is classified as a licensed spectrum (licensed spectrum) or an unlicensed spectrum (unlicensed spectrum). A licensed spectrum refers to a spectrum resource, where a particular mobile operator or a particular mobile technology (a Universal Mobile Telecommunications System (Universal Mobile Telecommunications System, UMTS)/Long Term Evolution (Long Term Evolution, LTE) system) is fixedly licensed to use the spectrum resource. An unlicensed spectrum refers to a spectrum resource that can be used and shared by different wireless devices. Devices in a wireless local area network (Wireless Fidelity, WiFi) mostly work in the unlicensed spectrum. In China, the unlicensed spectrum includes 2.4-2.4835 GHz and 5.725-5.850 GHz, or the like.

With rapid development of communications technologies, users have growing demands on mobile bandwidths. Mobile operators need more spectrum resources to satisfy the demands of the users, so as to make up a present situation in which current licensed spectrums cannot fully satisfy communications service demands of the users. Because currently utilization of frequency bands of unlicensed spectrums is relatively low, increasing mobile operators hope to provide communications services to the users by using the unlicensed spectrums. For example, an operator hopes to deploy a 3rd Generation Partnership Project (The 3rd Generation Partnership, 3GPP) network (for example, LTE) in an unlicensed spectrum, so that the operator can perform cooperative communication with an existing LTE network of the operator.

In an LTE system, in order to improve spectrum utilization, so that service quality assurance can be provided for user equipment within a network, and prevent UE from encountering a radio link connection failure (RLF), the UE often needs to measure radio link monitoring (Radio link Monitor, RLM).

Currently, in carrier aggregation in LTE, the UE performs RLM link monitoring only on a primary (Primary Cell, PCell). The UE does not need to perform radio link monitoring on a secondary cell (Secondary Cell, SCell). A network only needs to identify, by monitoring channel state information (Channel State Information, CSI) or a channel quality indication (Channel Quality Indication, CQI) reported by the UE, whether the UE can schedule data in the SCell, or whether a radio link in the SCell loses a connection. Usually, if the UE reports multiple out-of-range (Out Of Range) identifiers, the network may consider that the UE cannot schedule data in the SCell or the UE loses a connection.

Currently, measurement for CSI or a CQI is to measure a signal based on a channel state information-reference signal (Channel State Information-Reference Signals, CSI-RS) resource, or measure a signal on a cell-specific reference signal (Cell-specific Reference Signals, CRS) resource, or measure interference on channel state information-interference measurement (Channel State Information-Interference Measurement, CSI-IM) resource.

However, in an unlicensed spectrum, a base station needs to contend for a radio resource. Therefore, to send a CSI-RS or a CRS, the base station needs to obtain a radio resource through contention. If the base station cannot obtain any resource through contention, the base station cannot send a CSI-RS or a CRS. In this case, if the UE further needs to report CSI or a CQI, because the UE does not have a corresponding CSI or CQI measurement resource, the UE probably needs to report an Out Of Range identifier. However, the base station cannot determine, according to received reported Out Of Range, a reason for reporting the identifier. That is, the base station cannot determine whether Out Of Range is reported by the UE due to lack of a measurement resource when the UE still has a connection to the SCell, or whether Out Of Range is reported by the UE when no signal can be obtained through measurement because the UE has lost a connection to the SCell.

Therefore, the embodiments of the present invention further provide an SCell channel measurement method and apparatus, so as to resolve problems in the prior art that UE cannot report a status of a link between the UE and an SCell to a network side because the UE cannot monitor the SCell, and that the network side cannot properly schedule the UE because the network side cannot determine the status of the link between the UE and the SCell.

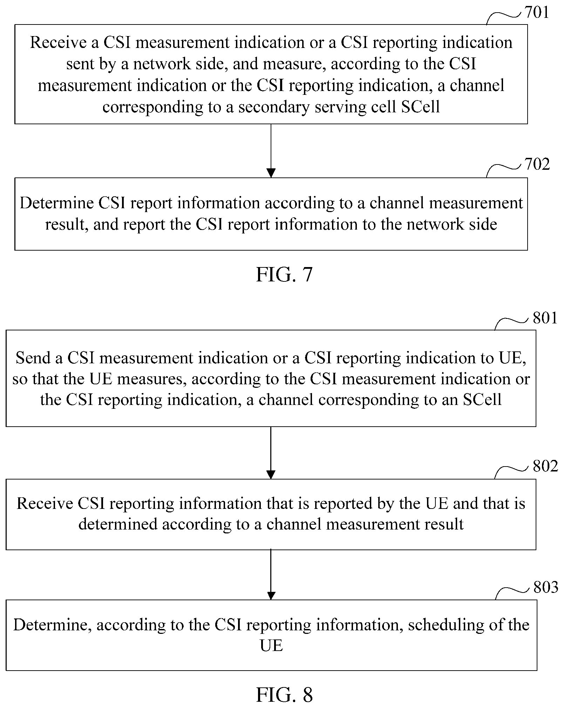

Referring to FIG. 7, an embodiment of the present invention further provides an SCell channel measurement method. The method is applicable to a UE side, and a procedure of the method includes the following steps.

Step 701: Receive a CSI measurement indication or a CSI reporting indication sent by a network side, and measure, according to the CSI measurement indication or the CSI reporting indication, a channel corresponding to a secondary serving cell SCell.

Specifically, the receiving a CSI measurement indication or a CSI reporting indication sent by a network side includes:
receiving a periodic CSI measurement indication or a periodic CSI reporting indication that is sent by the network side by using Radio Resource Control (Radio Resource Control, RRC) signaling; or
receiving an aperiodic CSI measurement indication or an aperiodic CSI reporting indication that is sent by the network side by using physical layer signaling.

Specifically, the measuring, according to the CSI measurement indication or the CSI reporting indication, a channel corresponding to an SCell includes:
determining a location of a CSI measurement reference resource according to a location of a reporting subframe carried in the CSI measurement indication or the CSI reporting indication, and measuring the CSI measurement reference resource corresponding to the location of the CSI measurement reference resource.

The CSI measurement reference resource includes at least one or a combination of the following: a CRS, a CSI-RS, or CSI-IM.

Step 702: Determine CSI report information according to a channel measurement result, and report the CSI report information to the network side.

Specifically, step 702 is performed in the following manners:
in a first manner, determining whether there is a CSI measurement reference resource, and determining the CSI reporting information according to a determining result and the channel measurement result; or
in a second manner, determining a current channel state of the SCell, and determining the CSI reporting information according to the current channel state and the channel measurement result; or
in a third manner, determining whether there is a CSI measurement reference resource, determining a current channel state of the SCell, and determining the CSI reporting information according to a determining result, the current channel state, and the channel measurement result.

Specifically, whether there is a CSI measurement reference resource is determined in the following manners:
receiving a reference resource indication sent by the network side, where the reference resource indication includes a time period for sending a reference signal, or a time period for canceling sending of a reference signal, or a time period for stop sending a reference signal; and determining, according to the reference resource indication, whether there is a reference signal, and determining, according to a determining result of a reference signal, whether there is a CSI measurement reference resource to which a reference signal belongs; or
measuring a reference signal at the location of the CSI measurement reference resource, and obtaining a measurement value of the reference signal; comparing the measurement value of the reference signal with a specified first threshold; and if the measurement value of the reference signal is greater than or equal to the first threshold, determining that there is a CSI measurement reference resource; otherwise, determining that there is no CSI measurement reference resource.

The first threshold is preset or is configured based on a base station.

The current channel state of the SCell is determined in the following manners:
performing RLM on the SCell, and if an RLM result is a radio link failure RLF, determining that the current channel state is an abnormal state; otherwise, determining that the current channel state is a normal state; or
measuring, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determining that the current channel state is an abnormal state; otherwise, determining that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determining that the current channel state is an abnormal state; otherwise, determining that the current channel state is a normal state.

That the current channel state is a normal state indicates that the UE can normally track a reference signal of the SCell, and the normal state includes a synchronization state and a video tracking success state. That the current channel state is an abnormal state indicates that the UE cannot normally track a reference signal of the SCell, and the abnormal state includes an out-of-synchronization state and a time-frequency tracking failure state.

When step 702 is performed in the first manner, specifically, the determining the CSI reporting information according to a determining result and the channel measurement result includes:
when the determining result is that there is a CSI measurement reference resource, using a measurement result of the CSI measurement reference resource as the CSI reporting information; or
when the determining result is that there is no CSI measurement reference resource, using a prestored effective CSI measurement result or a preset CSI measurement value as the CSI reporting information, where the effective CSI measurement result is a non Out Of Range CSI measurement result.

When step 702 is performed in the second manner, specifically,
the determining the CSI reporting information according to the current channel state and the channel measurement result includes:
when the current channel state is a normal state, using a measurement result of the CSI measurement reference resource as the CSI reporting information; or
when the current channel state is an abnormal state, setting the CSI reporting information to Out Of Range or a reference signal tracking failure indication of the SCell.

When step 702 is performed in the third manner, specifically, the determining the CSI reporting information according to a determining result, the current channel state, and the channel measurement result includes:
when the current channel state is a normal state, and the determining result is that there is a CSI measurement reference resource, using a measurement result of the CSI measurement reference resource as the CSI reporting information; or
when the current channel state is a normal state, and the determining result is that there is no CSI measurement reference resource, using a prestored effective CSI measurement result or a preset CSI measurement value as the CSI reporting information, where the effective CSI measurement result is a non-out-of-range Out Of Range CSI measurement result, where the prestored effective CSI measurement result is usually historical information; or
when the current channel state is an abnormal state, setting the CSI reporting information to Out Of Rang or a reference signal tracking failure indication of the SCell.

Usually, the CSI reporting information includes a CSI level identifier. The CSI level identifier is determined according to a CSI measurement result. A higher level indicates a better channel state represented by the CSI measurement result.

By means of the SCell channel measurement method provided in this embodiment of the present invention, UE receives a CSI measurement indication or a CSI reporting indication sent by a network side, measures, according to the CSI measurement indication or the CSI reporting indication, a channel corresponding to an SCell, determines CSI reporting information according to a channel measurement result, and reports the CSI reporting information to the network side, so that a channel of the SCell is measured, and the channel of the SCell is reported to the network side, thereby resolving a problem in the prior art that UE cannot report a status of a link between the UE and an SCell to a network side because the UE cannot monitor the SCell.

With reference to the foregoing embodiments, referring to FIG. 8, an embodiment of the present invention further provides an SCell channel measurement method. The method is applicable to a network side, and a procedure of the method includes the following steps.

Step 801: Send a CSI measurement indication or a CSI reporting indication to UE, so that the UE measures, according to the CSI measurement indication or the CSI reporting indication, a channel corresponding to an SCell.

Specifically, the sending a CSI measurement indication or a CSI reporting indication to UE includes:
sending, by the network side, a periodic CSI measurement indication or a periodic CSI reporting indication to the UE by using RRC signaling; or
sending, by the network side, an aperiodic CSI measurement indication or an aperiodic CSI reporting indication to the UE by using physical layer signaling.

Step 802: Receive CSI reporting information that is reported by the UE and that is determined according to a channel measurement result.

Step 803: Determine, according to the CSI reporting information, scheduling of the UE.

Specifically, performing step 503 includes:
determining, according to a location of a reporting subframe receiving the CSI reporting information, whether there is a CSI measurement reference resource; and
determining, according to a determining result and the CSI reporting information, scheduling of the UE.

Specifically, the determining, according to a determining result and the CSI reporting information, scheduling of the UE specifically includes:
when the determining result is that there is a CSI measurement reference resource, and the CSI reporting information does not include Out of Range and does not include a reference signal tracking failure indication of the SCell, performing data transmission scheduling on the UE according to the CSI reporting information;
when the determining result is that there is a CSI measurement reference resource, and the CSI reporting information includes Out of Range or includes a reference signal tracking failure indication of the SCell, skipping performing data transmission scheduling on the UE;
when the determining result is that there is no CSI measurement reference resource, and the CSI reporting information includes Out of Range or includes a reference signal tracking failure indication of the SCell, skipping performing data transmission scheduling on the UE; or
when the determining result is that there is no CSI measurement reference resource, and the CSI reporting information does not include Out of Range and does not include a reference signal tracking failure indication of the SCell, performing data transmission scheduling on the UE according to the CSI reporting information.

Specifically, when the determining result is that there is a CSI measurement reference resource, and the CSI reporting information does not include Out of Range and does not include a reference signal tracking failure indication of the SCell, the network side may determine that an SCell channel state of the UE is a normal state, and perform data transmission scheduling on the UE according to the CSI reporting information. For example, if a CSI level identifier included in the reported CSI reporting information is relatively high, a relatively large data block is scheduled to the UE for data transmission.

When the determining result is that there is a CSI measurement reference resource, and the CSI reporting information includes Out of Range or includes a reference signal tracking failure indication of the SCell, the network side may determine that an SCell channel state of the UE is an abnormal state, or an instantaneous channel of the UE becomes worse, and the network side does not schedule the UE to send or receive data.

When the determining result is that there is no CSI measurement reference resource, and the CSI reporting information includes Out of Range or includes a reference signal tracking failure indication of the SCell, the network side may determine that an SCell channel state of the UE is an abnormal state, and the network side does not schedule the UE to send or receive data, or deactivates the SCell of the UE.

When the determining result is that there is no CSI measurement reference resource, and the CSI reporting information does not include Out of Range and does not include a reference signal tracking failure indication of the SCell, the network side may determine that an SCell channel state of the UE is a normal state. In addition, it can be learned according to the third manner in step 702 that the CSI reporting information may be historical information. Therefore, data transmission scheduling may be performed on the UE with reference to the historical information in the CSI reporting information.

By means of the SCell channel measurement method provided in this embodiment of the present invention, a network side sends a CSI measurement indication or a CSI reporting indication to UE, so that the UE measures a channel and reports a measurement result to the network side in a form of CSI reporting information. The network determines, based on the CSI reporting information, scheduling of the UE, and the network side may obtain an SCell channel state that is reported by the UE by monitoring a channel of an SCell, so that data transmission scheduling can be performed on the UE, thereby resolving problems in the prior art that UE cannot report a status of a link between the UE and an SCell to a network side because the UE cannot monitor the SCell, and that the network side cannot properly schedule the UE because the network side cannot determine the status of the link between the UE and the SCell.

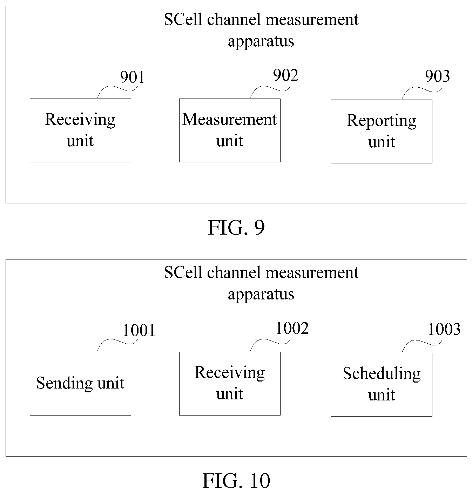

With reference to the foregoing embodiments, an embodiment of the present invention further provides an SCell channel measurement apparatus on a UE side. Referring to FIG. 9, the apparatus includes a receiving unit 901, a measurement unit 902, and a reporting unit 903, where
the receiving unit 901 is configured to receive a channel state information CSI measurement indication or a CSI reporting indication sent by a network side;
the measurement unit 902 is configured to measure, according to the CSI measurement indication or the CSI reporting indication, a channel corresponding to a secondary serving cell SCell; and
the reporting unit 903 is configured to: determine CSI report information according to a channel measurement result, and report the CSI report information to the network side.

The receiving unit 901 is specifically configured to:
receive a periodic CSI measurement indication or a periodic CSI reporting indication that is sent by the network side by using Radio Resource Control RRC signaling; or
receive an aperiodic CSI measurement indication or an aperiodic CSI reporting indication that is sent by the network side by using physical layer signaling.

The measurement unit 902 is specifically configured to:
determine a location of a CSI measurement reference resource according to a location of a reporting subframe carried in the CSI measurement indication or the CSI reporting indication, and measure the CSI measurement reference resource corresponding to the location of the CSI measurement reference resource.

Optionally, the CSI measurement reference resource includes at least one or a combination of the following: a cell-specific reference signal CRS, a channel state information-reference signal CSI-RS, or channel state information-interference measurement CSI-IM.

When determining the CSI report information according to the channel measurement result, the reporting unit 903 is specifically configured to:
determine whether there is a CSI measurement reference resource, and determine the CSI reporting information according to a determining result and the channel measurement result; or
determine a current channel state of the SCell, and determine the CSI reporting information according to the current channel state and the channel measurement result; or
determine whether there is a CSI measurement reference resource, determine a current channel state of the SCell, and determine the CSI reporting information according to a determining result, the current channel state, and the channel measurement result.

When determining whether there is a CSI measurement reference resource, the reporting unit is 903 specifically configured to:
receive a reference resource indication sent by the network side, where the reference resource indication includes a time period for sending a reference signal, or a time period for canceling sending of a reference signal, or a time period for stop sending a reference signal; and
determine, according to the reference resource indication, whether there is a reference signal, and determine, according to a determining result of a reference signal, whether there is a CSI measurement reference resource to which a reference signal belongs; or
measure a reference signal at the location of the CSI measurement reference resource, and obtain a measurement value of the reference signal; compare the measurement value of the reference signal with a specified first threshold; and if the measurement value of the reference signal is greater than or equal to the first threshold, determine that there is a CSI measurement reference resource; otherwise, determine that there is no CSI measurement reference resource.

When determining the current channel state of the SCell, the reporting unit 903 is specifically configured to:
perform radio link monitoring RLM on the SCell, and if an RLM result is a radio link failure RLF, determine that the current channel state is an abnormal state; otherwise, determine that the current channel state is a normal state; or
measure, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determine that the current channel state is an abnormal state; otherwise, determine that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determine that the current channel state is an abnormal state; otherwise, determine that the current channel state is a normal state.

When determining the CSI reporting information according to the determining result and the channel measurement result, the reporting unit 903 is specifically configured to:
when the determining result is that there is a CSI measurement reference resource, use a measurement result of the CSI measurement reference resource as the CSI reporting information; or
when the determining result is that there is no CSI measurement reference resource, use a prestored effective CSI measurement result or a preset CSI measurement value as the CSI reporting information, where the effective CSI measurement result is a non-out-of-range Out Of Range CSI measurement result.

When determining the CSI reporting information according to the current channel state and the channel measurement result, the reporting unit 903 is specifically configured to:
when the current channel state is a normal state, use a measurement result of the CSI measurement reference resource as the CSI reporting information; or
when the current channel state is an abnormal state, set the CSI reporting information to Out Of Range or a reference signal tracking failure indication of the SCell.

When determining the CSI reporting information according to the determining result, the current channel state, and the channel measurement result, the reporting unit 903 is specifically configured to:
when the current channel state is a normal state, and the determining result is that there is a CSI measurement reference resource, use a measurement result of the CSI measurement reference resource as the CSI reporting information; or
when the current channel state is a normal state, and the determining result is that there is no CSI measurement reference resource, use a prestored effective CSI measurement result or a preset CSI measurement value as the CSI reporting information, where the effective CSI measurement result is a non-out-of-range Out Of Range CSI measurement result; or
when the current channel state is an abnormal state, set the CSI reporting information to Out Of Rang or a reference signal tracking failure indication of the SCell.

By means of the SCell channel measurement apparatus on a UE side provided in this embodiment of the present invention, UE receives a CSI measurement indication or a CSI reporting indication sent by a network side, measures, according to the CSI measurement indication or the CSI reporting indication, a channel corresponding to an SCell, determines CSI reporting information according to a channel measurement result, and reports the CSI reporting information to the network side, so that a channel of the SCell is measured, and the channel of the SCell is reported to the network side, thereby resolving a problem in the prior art that UE cannot report a status of a link between the UE and an SCell to a network side because the UE cannot monitor the SCell.

With reference to the foregoing embodiments, an embodiment of the present invention further provides an SCell channel measurement apparatus on a network side. Referring to FIG. 10, the apparatus includes a sending unit 1001, a receiving unit 1002, and a scheduling unit 1003, where
the sending unit 1001 is configured to send a channel state information CSI measurement indication or a CSI reporting indication to user equipment UE, so that the UE measures, according to the CSI measurement indication or the CSI reporting indication, a channel corresponding to a secondary serving cell SCell;
the receiving unit 1002 is configured to receive CSI reporting information that is reported by the UE and that is determined according to a channel measurement result; and
the scheduling unit 1003 is configured to determine, according to the CSI reporting information, scheduling of the UE.

The sending unit 1001 is specifically configured to:
send a periodic CSI measurement indication or a periodic CSI reporting indication to the UE by using Radio Resource Control RRC signaling; or
send an aperiodic CSI measurement indication or an aperiodic CSI reporting indication to the UE by using physical layer signaling.

The scheduling unit 1003 is specifically configured to:
determine, according to a location of a reporting subframe receiving the CSI reporting information, whether there is a CSI measurement reference resource; and
determine, according to a determining result and the CSI reporting information, scheduling of the UE.

When determining, according to the determining result and the CSI reporting information, scheduling of the UE, the scheduling unit 1003 is specifically configured to:
when the determining result is that there is a CSI measurement reference resource, and the CSI reporting information does not include Out of Range and does not include a reference signal tracking failure indication of the SCell, perform data transmission scheduling on the UE according to the CSI reporting information;
when the determining result is that there is a CSI measurement reference resource, and the CSI reporting information includes Out of Range or includes a reference signal tracking failure indication of the SCell, skip performing data transmission scheduling on the UE;
when the determining result is that there is no CSI measurement reference resource, and the CSI reporting information includes Out of Range or includes a reference signal tracking failure indication of the SCell, skip performing data transmission scheduling on the UE; or
when the determining result is that there is no CSI measurement reference resource, and the CSI reporting information does not include Out of Range and does not include a reference signal tracking failure indication of the SCell, perform data transmission scheduling on the UE according to the CSI reporting information.

By means of the SCell channel measurement apparatus on a base station side provided in this embodiment of the present invention, a network sends a CSI measurement indication or a CSI reporting indication to UE, so that the UE measures a channel and reports a measurement result to the network side in a form of CSI reporting information. The network determines, based on the CSI reporting information, scheduling of the UE, and the network side may obtain an SCell channel state of the UE, so that data transmission scheduling can be performed on the UE, thereby resolving problems in the prior art that UE cannot report a status of a link between the UE and an SCell to a network side because the UE cannot monitor the SCell, and that the network side cannot properly schedule the UE because the network side cannot determine the status of the link between the UE and the SCell.

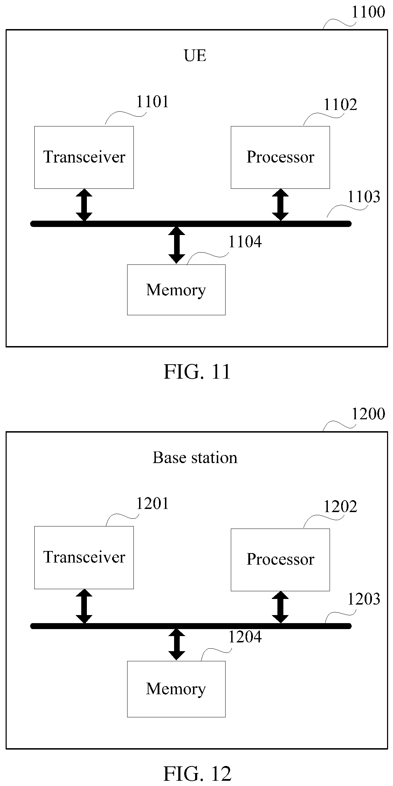

With reference to the foregoing embodiments, an embodiment of the present invention further provides UE. Referring to FIG. 11, the UE 800 includes a transceiver 1101, a processor 1102, a bus 1103, and a memory 1104.

The transceiver 1101, the processor 1102, and the memory 1104 are connected to each other by using the bus 1103. The bus 803 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only a bold line is used for representation in FIG. 11, but it does not represent that there is only one bus or one type of bus.

The transceiver 1101 is configured to: exchange signaling with a network side, for example, receive a CSI measurement indication or a CSI reporting indication sent by the network side, and report CSI reporting information to the network side, or the like.

The processor 1102 is configured to implement the SCell channel measurement method shown in FIG. 7 of the embodiments of the present invention, including:
receiving a channel state information CSI measurement indication or a CSI reporting indication sent by the network side, and measuring, according to the CSI measurement indication or the CSI reporting indication, a channel corresponding to a secondary serving cell SCell; and
determining CSI report information according to a channel measurement result, and reporting the CSI report information to the network side.

Optionally, the receiving a channel state indication CSI measurement indication or a CSI reporting indication sent by the network side includes:
receiving a periodic CSI measurement indication or a periodic CSI reporting indication that is sent by the network side by using Radio Resource Control RRC signaling; or
receiving an aperiodic CSI measurement indication or an aperiodic CSI reporting indication that is sent by the network side by using physical layer signaling.

Optionally, the measuring, according to the CSI measurement indication or the CSI reporting indication, a channel corresponding to an SCell includes:
determining a location of a CSI measurement reference resource according to a location of a reporting subframe carried in the CSI measurement indication or the CSI reporting indication, and measuring the CSI measurement reference resource corresponding to the location of the CSI measurement reference resource.

Optionally, the CSI measurement reference resource includes at least one or a combination of the following: a cell-specific reference signal CRS, a channel state information-reference signal CSI-RS, or channel state information-interference measurement CSI-IM.

Optionally, the determining CSI report information according to a channel measurement result includes:
determining whether there is a CSI measurement reference resource, and determining the CSI reporting information according to a determining result and the channel measurement result; or
determining a current channel state of the SCell, and determining the CSI reporting information according to the current channel state and the channel measurement result; or
determining whether there is a CSI measurement reference resource, determining a current channel state of the SCell, and determining the CSI reporting information according to a determining result, the current channel state, and the channel measurement result.

Optionally, the determining whether there is a CSI measurement reference resource includes:
receiving a reference resource indication sent by the network side, where the reference resource indication includes a time period for sending a reference signal, or a time period for canceling sending of a reference signal, or a time period for stop sending a reference signal; and
determining, according to the reference resource indication, whether there is a reference signal, and determining, according to a determining result of a reference signal, whether there is a CSI measurement reference resource to which a reference signal belongs; or
measuring a reference signal at the location of the CSI measurement reference resource, and obtaining a measurement value of the reference signal; comparing the measurement value of the reference signal with a specified first threshold; and if the measurement value of the reference signal is greater than or equal to the first threshold, determining that there is a CSI measurement reference resource; otherwise, determining that there is no CSI measurement reference resource.

Optionally, the determining a current channel state of the SCell includes:
performing radio link monitoring RLM on the SCell, and if an RLM result is a radio link failure RLF, determining that the current channel state is an abnormal state; otherwise, determining that the current channel state is a normal state; or
measuring, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determining that the current channel state is an abnormal state; otherwise, determining that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determining that the current channel state is an abnormal state; otherwise, determining that the current channel state is a normal state.

Optionally, the determining the CSI reporting information according to a determining result and the channel measurement result includes:
when the determining result is that there is a CSI measurement reference resource, using a measurement result of the CSI measurement reference resource as the CSI reporting information; or
when the determining result is that there is no CSI measurement reference resource, using a prestored effective CSI measurement result or a preset CSI measurement value as the CSI reporting information, where the effective CSI measurement result is a non-out-of-range Out Of Range CSI measurement result.

Optionally, the determining the CSI reporting information according to the current channel state and the channel measurement result includes:
when the current channel state is a normal state, using a measurement result of the CSI measurement reference resource as the CSI reporting information; or
when the current channel state is an abnormal state, setting the CSI reporting information to Out Of Range or a reference signal tracking failure indication of the SCell.

Optionally, the determining the CSI reporting information according to a determining result, the current channel state, and the channel measurement result includes:
when the current channel state is a normal state, and the determining result is that there is a CSI measurement reference resource, using a measurement result of the CSI measurement reference resource as the CSI reporting information; or
when the current channel state is a normal state, and the determining result is that there is no CSI measurement reference resource, using a prestored effective CSI measurement result or a preset CSI measurement value as the CSI reporting information, where the effective CSI measurement result is a non-out-of-range Out Of Range CSI measurement result; or
when the current channel state is an abnormal state, setting the CSI reporting information to Out Of Rang or a reference signal tracking failure indication of the SCell.

The UE 1100 further includes the memory 1104, configured to store a program, or the like. Specifically, the program may include program code, and the program code includes a computer operation instruction. The memory 1104 may include a random access memory (random access memory, RAM), or may further include a non-volatile memory (non-volatile memory), for example, at least one magnetic disk storage. The processor 1102 executes an application program stored in the memory 1104, to implement the foregoing SCell channel measurement method.

The UE provided in this embodiment of the present invention receives a CSI measurement indication or a CSI reporting indication sent by a network side, measures, according to the CSI measurement indication or the CSI reporting indication, a channel corresponding to an SCell, determines CSI reporting information according to a channel measurement result, and reports the CSI reporting information to the network side, so that a channel of the SCell is measured, and the channel of the SCell is reported to the network side, thereby resolving a problem in the prior art that UE cannot report a status of a link between the UE and an SCell to a network side because the UE cannot monitor the SCell.

With reference to the foregoing embodiments, an embodiment of the present invention further provides a base station. Referring to FIG. 12, the base station includes a transceiver 1201, a processor 1202, a bus 1203, and a memory 1204.

The transceiver 1201, the processor 1202, and the memory 1204 are connected to each other by using the bus 1203. The bus 1203 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only a bold line is used for representation in FIG. 12, but it does not represent that there is only one bus or one type of bus.

The transceiver 1201 is configured to: exchange information with UE, for example, send a CSI measurement indication or a CSI reporting indication to the UE, and receive CSI reporting information reported by the UE, or the like.

The processor 1202 is configured to implement the multi-carrier measurement configuration method shown in FIG. 8 of the embodiments of the present invention, including:
sending a channel state information CSI measurement indication or a CSI reporting indication to the user equipment UE, so that the UE measures, according to the CSI measurement indication or the CSI reporting indication, a channel corresponding to a secondary serving cell SCell;
receiving CSI reporting information that is reported by the UE and that is determined according to a channel measurement result; and
determining, according to the CSI reporting information, scheduling of the UE.

Optionally, the sending a CSI measurement indication or a CSI reporting indication to the UE includes:
sending a periodic CSI measurement indication or a periodic CSI reporting indication to the UE by using Radio Resource Control RRC signaling; or
sending an aperiodic CSI measurement indication or an aperiodic CSI reporting indication to the UE by using physical layer signaling.

Optionally, the determining, according to the CSI reporting information, scheduling of the UE includes:
determining, according to a location of a reporting subframe receiving the CSI reporting information, whether there is a CSI measurement reference resource; and
determining, according to a determining result and the CSI reporting information, scheduling of the UE.

Optionally, the determining, according to a determining result and the CSI reporting information, scheduling of the UE includes:
when the determining result is that there is a CSI measurement reference resource, and the CSI reporting information does not include Out of Range and does not include a reference signal tracking failure indication of the SCell, performing data transmission scheduling on the UE according to the CSI reporting information;
when the determining result is that there is a CSI measurement reference resource, and the CSI reporting information includes Out of Range or includes a reference signal tracking failure indication of the SCell, skipping performing data transmission scheduling on the UE;
when the determining result is that there is no CSI measurement reference resource, and the CSI reporting information includes Out of Range or includes a reference signal tracking failure indication of the SCell, skipping performing data transmission scheduling on the UE; or
when the determining result is that there is no CSI measurement reference resource, and the CSI reporting information does not include Out of Range and does not include a reference signal tracking failure indication of the SCell, performing data transmission scheduling on the UE according to the CSI reporting information.

The base station 1200 further includes the memory 1204, configured to store a program, or the like. Specifically, the program may include program code, and the program code includes a computer operation instruction. The memory 1204 may include a random access memory (random access memory, RAM), or may further include a non-volatile memory (non-volatile memory), for example, at least one magnetic disk storage. The processor 1202 executes an application program stored in the memory 1204, to implement the foregoing SCell channel measurement method.

The base station provided in this embodiment of the present invention sends a CSI measurement indication or a CSI reporting indication to UE, so that the UE measures a channel and reports a measurement result to the base station in a form of CSI reporting information. The base station determines, based on the CSI reporting information, scheduling of the UE, and the base station may obtain an SCell channel state of the UE, so that data transmission scheduling can be performed on the UE, thereby resolving problems in the prior art that UE cannot report a status of a link between the UE and an SCell to a base station because the UE cannot monitor the SCell, and that the base station cannot properly schedule the UE because the base station cannot determine the status of the link between the UE and the SCell.

According to the SCell channel measurement method and apparatus provided in the embodiments of the present invention, in the method, UE receives a CSI measurement indication or a CSI reporting indication sent by a network side, measures, according to the CSI measurement indication or the CSI reporting indication, a channel corresponding to an SCell, determines CSI reporting information according to a channel measurement result, and reports the CSI reporting information to the network side. The UE may measure a channel of the SCell, and report a measurement result to the network side, and the network side can obtain an SCell channel status of the UE, so that data transmission scheduling can be performed on the UE, thereby resolving problems in the prior art that UE cannot report a status of a link between the UE and an SCell to a network side because the UE cannot monitor the SCell, and that the network side cannot properly schedule the UE because the network side cannot determine the status of the link between the UE and the SCell.

To sum up, according to the multi-carrier measurement configuration method and apparatus of UE provided in the embodiments of the present invention, in the method, UE receives measurement configuration information that is delivered by a network side and that carries gap measurement configuration information or small gap measurement configuration information, and measures multiple carriers based on received processing configuration information, so as to implement configuration of a carrier measurement manner by the network side, thereby improving applicability of carrier measurement, and improving carrier aggregation efficiency of the UE.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A multi-carrier measurement configuration method, comprising:
receiving, by user equipment UE, a measurement configuration message sent by a network side, wherein the measurement configuration message comprises gap gap measurement configuration information and/or small gap small gap measurement configuration information; and
measuring , by the UE, a carrier according to the measurement configuration message.

2. The method according to claim 1, wherein the receiving, by UE, a measurement configuration message sent by a network side comprises:
receiving, by the UE by using Media Access Control MAC signaling or physical downlink control channel PDCCH signaling or Radio Resource Control RRC signaling, the measurement configuration message sent by the network side.

3. The method according to claim 1 or 2, wherein the small gap measurement configuration information comprises any one or a combination of the following:
a small gap measurement period, a small gap measurement quantity, small gap duration, an offset offset value, or a length of a time interval between two adjacent small gaps.

4. The method according to claim 1 or 2, wherein the small gap measurement configuration information comprises three consecutive small gaps; and
a radio frequency link of the UE consecutively measures two carriers according to the three consecutive small gaps.

5. The method according to any one of claims 1 to 4, wherein the gap measurement configuration information comprises at least first gap measurement configuration information and second gap measurement configuration information, wherein each piece of gap measurement configuration information comprises one or a combination of the following:
a gap measurement period, a gap measurement quantity, gap duration, an offset offset value, or a length of a time interval between two adjacent gaps; and
the UE determines, according to an indication message sent by the network side, to use the first gap measurement configuration information or the second gap measurement configuration information to measure a carrier.

6. The method according to any one of claims 1 to 5, wherein the gap measurement configuration information comprises gap duration information, and the gap duration information comprises 10 milliseconds, 11 milliseconds, or 12 milliseconds.

7. The method according to claim 6, wherein the UE measures at least two carriers in a gap indicated by the gap duration information.

8. The method according to any one of claims 1 to 7, wherein before the receiving, by UE, a measurement configuration message, the method further comprises:
sending, by the UE, a measurement capability message to the network side, wherein the measurement capability message comprises small-based measurement capability information and/or gap-based measurement capability information of the UE.

9. The method according to claim 8, wherein the sending, by the UE, a measurement capability message to the network side comprises:
sending, by the UE, the measurement capability message to the network side by using Radio Resource Control RRC signaling.

10. The method according to claim 8 or 9, wherein the small gap-based measurement capability information comprises any one or a combination of the following:
a small gap measurement period;
a small gap measurement quantity;
small gap duration;
an offset offset value; or
a length of a time interval between two adjacent small gaps.

11. The method according to claim 8 or 9, wherein the gap-based measurement capability information comprises any one or a combination of the following:
a gap measurement period;
a gap measurement quantity;
gap duration;
an offset offset value; or
a length of a time interval between two adjacent gaps.

12. The method according to any one of claim 8 to 11, wherein
the small gap-based measurement capability information comprises at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information comprises: at least one operating band combination manner, and small gap measurement indication information of each operating band combination manner, or at least one or a combination of the following corresponding to each operating band combination manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the gap-based measurement capability information comprises: at least one working carrier aggregation manner, and gap measurement indication information of each working carrier aggregation manner, or at least one or a combination of the following corresponding to each working carrier aggregation manner:
gap measurement indication information of at least one carrier,
gap measurement indication information of at least one measurement carrier aggregation manner,
gap measurement indication information of at least one frequency band, or
gap measurement indication information of at least one frequency band combination; or
the gap-based measurement capability information comprises: at least one operating band combination manner, and gap measurement indication information of each operating band combination manner, or at least one or a combination of the following corresponding to each operating band combination manner:
gap measurement indication information of at least one carrier,
gap measurement indication information of at least one measurement carrier aggregation manner,
gap measurement indication information of at least one frequency band, or
gap measurement indication information of at least one frequency band combination.

13. The method according to claim 12, wherein the working carrier aggregation manner and/or the measurement carrier aggregation manner comprises: an in-band adjacent carrier aggregation manner, an in-band non-adjacent carrier aggregation manner, or a cross-band non-adjacent carrier aggregation manner, wherein a frequency band combination comprises at least one frequency band.

14. The method according to claim 12 or 13, wherein
gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

15. A multi-carrier measurement configuration method, comprising:
receiving, by a network side, a measurement capability message sent by user equipment UE, wherein the measurement capability message comprises small-based measurement capability information and/or gap-based measurement capability information of the UE; and
sending, by the network side, a measurement configuration message to the UE according to the measurement capability message, wherein the measurement configuration message comprises gap gap measurement configuration information and/or small gap small gap measurement configuration information, so that the UE measures a carrier according to the measurement configuration message.

16. The method according to claim 15, wherein the receiving, by a network side, a measurement capability message sent by UE comprises:
receiving, by the network side by using Radio Resource Control RRC signaling, the measurement capability message sent by the UE.

17. The method according to claim 15 or 16, wherein the small gap-based measurement capability information comprises any one or a combination of the following:
a small gap measurement period;
a small gap measurement quantity;
small gap duration;
an offset offset value; or
a length of a time interval between two adjacent small gaps.

18. The method according to claim 15 or 16, wherein the gap-based measurement capability information comprises any one or a combination of the following:
a gap measurement period;
a gap measurement quantity;
gap duration;
an offset offset value; or
a length of a time interval between two adjacent gaps.

19. The method according to any one of claim 15 to 18, wherein
the small gap-based measurement capability information comprises at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information comprises: at least one operating band combination manner, and small gap measurement indication information of each operating band combination manner, or at least one or a combination of the following corresponding to each operating band combination manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the gap-based measurement capability information comprises: at least one working carrier aggregation manner, and gap measurement indication information of each working carrier aggregation manner, or at least one or a combination of the following corresponding to each working carrier aggregation manner:
gap measurement indication information of at least one carrier,
gap measurement indication information of at least one measurement carrier aggregation manner,
gap measurement indication information of at least one frequency band, or
gap measurement indication information of at least one frequency band combination; or
the gap-based measurement capability information comprises: at least one operating band combination manner, and gap measurement indication information of each operating band combination manner, or at least one or a combination of the following corresponding to each operating band combination manner:
gap measurement indication information of at least one carrier,
gap measurement indication information of at least one measurement carrier aggregation manner,
gap measurement indication information of at least one frequency band, or
gap measurement indication information of at least one frequency band combination.

20. The method according to claim 19, wherein the working carrier aggregation manner and/or the measurement carrier aggregation manner comprises: an in-band adjacent carrier aggregation manner, an in-band non-adjacent carrier aggregation manner, or a cross-band non-adjacent carrier aggregation manner, wherein a frequency band combination comprises at least one frequency band.

21. The method according to claim 19 or 20, wherein
gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

22. The method according to any one of claims 15 to 21, wherein the sending, by the network side, a measurement configuration message to the UE comprises:
sending, by the network side, the measurement configuration message to the UE by using Media Access Control MAC signaling or physical downlink control channel PDCCH signaling or Radio Resource Control RRC signaling.

23. The method according to any one of claims 15 to 22, wherein the small gap measurement configuration information comprises any one or a combination of the following:
a small gap measurement period, a small gap measurement quantity, small gap duration, an offset offset value, or a length of a time interval between two adjacent small gaps.

24. The method according to any one of claims 15 to 22, wherein the small gap measurement configuration information comprises three consecutive small gaps, so that a radio frequency link of the UE consecutively measures two carriers according to the three consecutive small gaps.

25. The method according to any one of claims 15 to 24, wherein the gap measurement configuration information comprises at least first gap measurement configuration information and second gap measurement configuration information, wherein each piece of gap measurement configuration information comprises one or a combination of the following:
a gap measurement period, a gap measurement quantity, gap duration, an offset offset value, or a length of a time interval between two adjacent gaps.

26. The method according to claim 25, wherein after the sending, by the network side, a measurement configuration message to the UE, the method further comprises:
sending, by the network side, an indication message to the UE, so that the UE determines, according to the indication message sent by the network side, to use the first gap measurement configuration information or the second gap measurement configuration information to measure a carrier.

27. The method according to any one of claims 15 to 26, wherein the gap measurement configuration information comprises gap duration information, and the gap duration information comprises 10 milliseconds, 11 milliseconds, or 12 milliseconds, so that the UE measures at least two carriers in a gap indicated by the gap duration information.

28. An SCell channel measurement method, comprising:
receiving a channel state information CSI measurement indication or a CSI reporting indication sent by a network side, and measuring, according to the CSI measurement indication or the CSI reporting indication, a channel corresponding to a secondary serving cell SCell; and
determining CSI report information according to a channel measurement result, and reporting the CSI report information to the network side.

29. The method according to claim 28, wherein the receiving a channel state indication CSI measurement indication or a CSI reporting indication sent by a network side comprises:
receiving a periodic CSI measurement indication or a periodic CSI reporting indication that is sent by the network side by using Radio Resource Control RRC signaling; or
receiving an aperiodic CSI measurement indication or an aperiodic CSI reporting indication that is sent by the network side by using physical layer signaling.

30. The method according to claim 28 or 29, wherein the measuring, according to the CSI measurement indication or the CSI reporting indication, a channel corresponding to an SCell comprises:
determining a location of a CSI measurement reference resource according to a location of a reporting subframe carried in the CSI measurement indication or the CSI reporting indication, and measuring the CSI measurement reference resource corresponding to the location of the CSI measurement reference resource.

31. The method according to claim 30, wherein the CSI measurement reference resource comprises at least one or a combination of the following: a cell-specific reference signal CRS, a channel state information-reference signal CSI-RS, or channel state information-interference measurement CSI-IM.

32. The method according to claim 30 or 31, wherein the determining CSI report information according to a channel measurement result comprises:
determining whether there is a CSI measurement reference resource, and determining the CSI reporting information according to a determining result and the channel measurement result; or
determining a current channel state of the SCell, and determining the CSI reporting information according to the current channel state and the channel measurement result; or
determining whether there is a CSI measurement reference resource, determining a current channel state of the SCell, and determining the CSI reporting information according to a determining result, the current channel state, and the channel measurement result.

33. The method according to claim 32, wherein the determining whether there is a CSI measurement reference resource comprises:
receiving a reference resource indication sent by the network side, wherein the reference resource indication comprises a time period for sending a reference signal, or a time period for canceling sending of a reference signal, or a time period for stop sending a reference signal; and
determining, according to the reference resource indication, whether there is a reference signal, and determining, according to a determining result of a reference signal, whether there is a CSI measurement reference resource to which a reference signal belongs; or
measuring a reference signal at the location of the CSI measurement reference resource, and obtaining a measurement value of the reference signal; comparing the measurement value of the reference signal with a specified first threshold; and if the measurement value of the reference signal is greater than or equal to the first threshold, determining that there is a CSI measurement reference resource; otherwise, determining that there is no CSI measurement reference resource.

34. The method according to claim 32, wherein the determining a current channel state of the SCell comprises:
performing radio link monitoring RLM on the SCell, and if an RLM result is a radio link failure RLF, determining that the current channel state is an abnormal state; otherwise, determining that the current channel state is a normal state; or
measuring, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determining that the current channel state is an abnormal state; otherwise, determining that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determining that the current channel state is an abnormal state; otherwise, determining that the current channel state is a normal state.

35. The method according to claim 32, wherein the determining the CSI reporting information according to a determining result and the channel measurement result comprises:
when the determining result is that there is a CSI measurement reference resource, using a measurement result of the CSI measurement reference resource as the CSI reporting information; or
when the determining result is that there is no CSI measurement reference resource, using a prestored effective CSI measurement result or a preset CSI measurement value as the CSI reporting information, wherein the effective CSI measurement result is a non-out-of-range Out Of Range CSI measurement result.

36. The method according to claim 32, wherein the determining the CSI reporting information according to the current channel state and the channel measurement result comprises:
when the current channel state is a normal state, using a measurement result of the CSI measurement reference resource as the CSI reporting information; or
when the current channel state is an abnormal state, setting the CSI reporting information to Out Of Range or a reference signal tracking failure indication of the SCell.

37. The method according to claim 32, wherein the determining the CSI reporting information according to a determining result, the current channel state, and the channel measurement result comprises:
when the current channel state is a normal state, and the determining result is that there is a CSI measurement reference resource, using a measurement result of the CSI measurement reference resource as the CSI reporting information; or
when the current channel state is a normal state, and the determining result is that there is no CSI measurement reference resource, using a prestored effective CSI measurement result or a preset CSI measurement value as the CSI reporting information, wherein the effective CSI measurement result is a non-out-of-range Out Of Range CSI measurement result; or
when the current channel state is an abnormal state, setting the CSI reporting information to Out Of Rang or a reference signal tracking failure indication of the SCell.

38. An SCell channel measurement method, comprising:
sending a channel state information CSI measurement indication or a CSI reporting indication to user equipment UE, so that the UE measures, according to the CSI measurement indication or the CSI reporting indication, a channel corresponding to a secondary serving cell SCell;
receiving CSI reporting information that is reported by the UE and that is determined according to a channel measurement result; and
determining, according to the CSI reporting information, scheduling of the UE.

39. The method according to claim 38, wherein the sending a channel state information CSI measurement indication or a CSI reporting indication to UE comprises:
sending a periodic CSI measurement indication or a periodic CSI reporting indication to the UE by using Radio Resource Control RRC signaling; or
sending an aperiodic CSI measurement indication or an aperiodic CSI reporting indication to the UE by using physical layer signaling.

40. The method according to claim 38 or 39, wherein the determining, according to the CSI reporting information, scheduling of the UE comprises:
determining, according to a location of a reporting subframe receiving the CSI reporting information, whether there is a CSI measurement reference resource; and
determining, according to a determining result and the CSI reporting information, scheduling of the UE.

41. The method according to claim 40, wherein the determining, according to a determining result and the CSI reporting information, scheduling of the UE comprises:
when the determining result is that there is a CSI measurement reference resource, and the CSI reporting information does not comprise Out of Range and does not comprise a reference signal tracking failure indication of the SCell, performing data transmission scheduling on the UE according to the CSI reporting information;
when the determining result is that there is a CSI measurement reference resource, and the CSI reporting information comprises Out of Range or comprises a reference signal tracking failure indication of the SCell, skipping performing data transmission scheduling on the UE;
when the determining result is that there is no CSI measurement reference resource, and the CSI reporting information comprises Out of Range or comprises a reference signal tracking failure indication of the SCell, skipping performing data transmission scheduling on the UE; or
when the determining result is that there is no CSI measurement reference resource, and the CSI reporting information does not comprise Out of Range and does not comprise a reference signal tracking failure indication of the SCell, performing data transmission scheduling on the UE according to the CSI reporting information.

42. A multi-carrier measurement configuration apparatus, comprising:
a receiving unit, configured to receive a measurement configuration message sent by a network side, wherein the measurement configuration message comprises gap gap measurement configuration information and/or small gap small gap measurement configuration information; and
an operation unit, configured to measure a carrier according to the measurement configuration message.

43. The apparatus according to claim 42, wherein the receiving unit is specifically configured to:
receive, by using Media Access Control MAC signaling or physical downlink control channel PDCCH signaling or Radio Resource Control RRC signaling, the measurement configuration message sent by the network side.

44. The apparatus according to claim 42 or 43, wherein the small gap measurement configuration information comprises any one or a combination of the following:
a small gap measurement period, a small gap measurement quantity, small gap duration, an offset offset value, or a length of a time interval between two adjacent small gaps.

45. The apparatus according to claim 42 or 43, wherein the small gap measurement configuration information comprises three consecutive small gaps; and
a radio frequency link of the UE consecutively measures two carriers according to the three consecutive small gaps.

46. The apparatus according to any one of claims 42 to 45, wherein the gap measurement configuration information comprises at least first gap measurement configuration information and second gap measurement configuration information, wherein each piece of gap measurement configuration information comprises one or a combination of the following:
a gap measurement period, a gap measurement quantity, gap duration, an offset offset value, or a length of a time interval between two adjacent gaps; and
the operation unit determines, according to an indication message sent by the network side, to use the first gap measurement configuration information or the second gap measurement configuration information to measure a carrier.

47. The apparatus according to any one of claims 42 to 46, wherein the gap measurement configuration information comprises gap duration information, and the gap duration information comprises 10 milliseconds, 11 milliseconds, or 12 milliseconds.

48. The apparatus according to claim 47, wherein the operation unit is specifically configured to:
measure at least two carriers in a gap indicated by the gap duration information.

49. The apparatus according to any one of claims 42 to 48, wherein the apparatus further comprises:
a sending unit, configured to: before the receiving unit receives the measurement configuration message, send a measurement capability message to the network side, wherein the measurement capability message comprises small-based measurement capability information and/or gap-based measurement capability information of the apparatus.

50. The apparatus according to claim 49, wherein the sending unit is specifically configured to:
send the measurement capability message to the network side by using Radio Resource Control RRC signaling.

51. The apparatus according to claim 49 or 50, wherein the small gap-based measurement capability information comprises any one or a combination of the following:
a small gap measurement period;
a small gap measurement quantity;
small gap duration;
an offset offset value; or
a length of a time interval between two adjacent small gaps.

52. The apparatus according to claim 49 or 50, wherein the gap-based measurement capability information comprises any one or a combination of the following:
a gap measurement period;
a gap measurement quantity;
gap duration;
an offset offset value; or
a length of a time interval between two adjacent gaps.

53. The apparatus according to any one of claims 49 to 52, wherein
the small gap-based measurement capability information comprises at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information comprises: at least one operating band combination manner, and small gap measurement indication information of each operating band combination manner, or at least one or a combination of the following corresponding to each operating band combination manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the gap-based measurement capability information comprises: at least one working carrier aggregation manner, and gap measurement indication information of each working carrier aggregation manner, or at least one or a combination of the following corresponding to each working carrier aggregation manner:
gap measurement indication information of at least one carrier,
gap measurement indication information of at least one measurement carrier aggregation manner,
gap measurement indication information of at least one frequency band, or
gap measurement indication information of at least one frequency band combination; or
the gap-based measurement capability information comprises: at least one operating band combination manner, and gap measurement indication information of each operating band combination manner, or at least one or a combination of the following corresponding to each operating band combination manner:
gap measurement indication information of at least one carrier,
gap measurement indication information of at least one measurement carrier aggregation manner,
gap measurement indication information of at least one frequency band, or
gap measurement indication information of at least one frequency band combination.

54. The apparatus according to claim 53, wherein the working carrier aggregation manner and/or the measurement carrier aggregation manner comprises: an in-band adjacent carrier aggregation manner, an in-band non-adjacent carrier aggregation manner, or a cross-band non-adjacent carrier aggregation manner, wherein a frequency band combination comprises at least one frequency band.

55. The apparatus according to claim 53 or 54, wherein
gap measurement indication information or small gap measurement indication information of any carrier that corresponds to any working carrier aggregation manner is used to indicate whether a gap or a small gap is needed, when the apparatus works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the apparatus works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the apparatus works in any working carrier aggregation manner, for measuring any carrier in any frequency band or any measurement carrier aggregation manner;
gap measurement indication information or small gap measurement indication information of any frequency band combination that corresponds to any working carrier aggregation manner is used to indicate whether a gap or a small gap is needed, when the apparatus works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the apparatus works in any operating band combination manner, for measuring any carrier;
gap measurement indication information or small gap measurement indication information of any measurement carrier aggregation manner that corresponds to any operating band combination manner is used to indicate whether a gap or a small gap is needed, when the apparatus works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the apparatus works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the apparatus works in any operating band combination manner, for measuring any carrier aggregation manner in the one frequency band combination;
gap measurement indication information or small gap measurement indication information of any working carrier aggregation manner is used to indicate whether a gap or a small gap is needed, when the apparatus works in any working carrier aggregation manner, for measuring any carrier or any measurement carrier aggregation manner; and
gap measurement indication information or small gap measurement indication information of any operating band combination manner is used to indicate whether a gap or a small gap is needed, when the apparatus works in any operating band combination manner, for measuring any carrier or any measurement carrier aggregation manner.

56. A multi-carrier measurement configuration apparatus, comprising:
a receiving unit, configured to receive a measurement capability message sent by user equipment UE, wherein the measurement capability message comprises small-based measurement capability information and/or gap-based measurement capability information of the UE; and
a processing unit, configured to send a measurement configuration message to the UE according to the measurement capability message, wherein the measurement configuration message comprises gap gap measurement configuration information and/or small gap small gap measurement configuration information, so that the UE measures a carrier according to the measurement configuration message.

57. The apparatus according to claim 56, wherein the receiving unit is specifically configured to:
receive, by using Radio Resource Control RRC signaling, the measurement capability message sent by the UE.

58. The apparatus according to claim 56 or 57, wherein the small gap-based measurement capability information comprises any one or a combination of the following:
a small gap measurement period;
a small gap measurement quantity;
small gap duration;
an offset offset value; or
a length of a time interval between two adjacent small gaps.

59. The apparatus according to claim 56 or 57, wherein the gap-based measurement capability information comprises any one or a combination of the following:
a gap measurement period;
a gap measurement quantity;
gap duration;
an offset offset value; or
a length of a time interval between two adjacent gaps.

60. The apparatus according to any one of claims 56 to 59, wherein
the small gap-based measurement capability information comprises at least one working carrier aggregation manner, and small gap measurement indication information of each working carrier aggregation manner, or at least one or a combination of the following corresponding to each working carrier aggregation manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the small gap-based measurement capability information comprises: at least one operating band combination manner, and small gap measurement indication information of each operating band combination manner, or at least one or a combination of the following corresponding to each operating band combination manner:
small gap measurement indication information of at least one carrier,
small gap measurement indication information of at least one measurement carrier aggregation manner,
small gap measurement indication information of at least one frequency band, or
small gap measurement indication information of at least one frequency band combination; or
the gap-based measurement capability information comprises: at least one working carrier aggregation manner, and gap measurement indication information of each working carrier aggregation manner, or at least one or a combination of the following corresponding to each working carrier aggregation manner:
gap measurement indication information of at least one carrier,
gap measurement indication information of at least one measurement carrier aggregation manner,
gap measurement indication information of at least one frequency band, or
gap measurement indication information of at least one frequency band combination; or
the gap-based measurement capability information comprises: at least one operating band combination manner, and gap measurement indication information of each operating band combination manner, or at least one or a combination of the following corresponding to each operating band combination manner:
gap measurement indication information of at least one carrier,
gap measurement indication information of at least one measurement carrier aggregation manner,
gap measurement indication information of at least one frequency band, or
gap measurement indication information of at least one frequency band combination.

61. The apparatus according to claim 60, wherein the working carrier aggregation manner and/or the measurement carrier aggregation manner comprises: an in-band adjacent carrier aggregation manner, an in-band non-adjacent carrier aggregation manner, or a cross-band non-adjacent carrier aggregation manner, wherein a frequency band combination comprises at least one frequency band.

62. The apparatus according to claim 60 or 61, wherein
gap measurement indication information or small gap measurement indication information of any carrier that corresponds to any working carrier aggregation manner is used to indicate whether a gap or a small gap is needed, when the UE works in any working carrier aggregation manner, for measuring any carrier;
gap measurement indication information or small gap measurement indication information of any measurement carrier aggregation manner that corresponds to any working carrier aggregation manner is used to indicate whether a gap or a small gap is needed, when the UE works in any working carrier aggregation manner, for measuring any measurement carrier aggregation manner;
gap measurement indication information or small gap measurement indication information of any frequency band that corresponds to any working carrier aggregation manner is used to indicate whether a gap or a small gap is needed, when the UE works in any working carrier aggregation manner, for measuring any carrier or any measurement carrier aggregation manner in any frequency band;
gap measurement indication information or small gap measurement indication information of any frequency band combination that corresponds to any working carrier aggregation manner is used to indicate whether a gap or a small gap is needed, when the UE works in any working carrier aggregation manner, for measuring any carrier aggregation manner in any frequency band combination;
gap measurement indication information or small gap measurement indication information of any carrier that corresponds to any operating band combination manner is used to indicate whether a gap or a small gap is needed, when the UE works in any operating band combination manner, for measuring any carrier;
gap measurement indication information or small gap measurement indication information of any measurement carrier aggregation manner that corresponds to any operating band combination manner is used to indicate whether a gap or a small gap is needed, when the UE works in any operating band combination manner, for measuring any measurement carrier aggregation manner;
gap measurement indication information or small gap measurement indication information of any frequency band that corresponds to any operating band combination manner is used to indicate whether a gap or a small gap is needed, when the UE works in any operating band combination manner, for measuring any carrier or any measurement carrier aggregation manner in any frequency band;
gap measurement indication information or small gap measurement indication information of any frequency band combination that corresponds to any operating band combination manner is used to indicate whether a gap or a small gap is needed, when the UE works in any operating band combination manner, for measuring any carrier aggregation manner in the one frequency band combination;
gap measurement indication information or small gap measurement indication information of any working carrier aggregation manner is used to indicate whether a gap or a small gap is needed, when the UE works in any working carrier aggregation manner, for measuring any carrier or any measurement carrier aggregation manner; and
gap measurement indication information or small gap measurement indication information of any operating band combination manner is used to indicate whether a gap or a small gap is needed, when the UE works in any operating band combination manner, for measuring any carrier or any measurement carrier aggregation manner.

63. The apparatus according to any one of claims 56 to 62, wherein the processing unit is specifically configured to:
send the measurement configuration message to the UE by using Media Access Control MAC signaling or physical downlink control channel PDCCH signaling or Radio Resource Control RRC signaling.

64. The apparatus according to any one of claims 56 to 63, wherein the small gap measurement configuration information comprises any one or a combination of the following:
a small gap measurement period, a small gap measurement quantity, small gap duration, an offset offset value, or a length of a time interval between two adjacent small gaps.

65. The apparatus according to any one of claims 56 to 63, wherein the small gap measurement configuration information comprises three consecutive small gaps, so that a radio frequency link of the UE consecutively measures two carriers according to the three consecutive small gaps.

66. The apparatus according to any one of claims 56 to 65, wherein the gap measurement configuration information comprises at least first gap measurement configuration information and second gap measurement configuration information, wherein each piece of gap measurement configuration information comprises one or a combination of the following:
a gap measurement period, a gap measurement quantity, gap duration, an offset offset value, or a length of a time interval between two adjacent gaps.

67. The apparatus according to claim 66, wherein the processing unit is further configured to:
after the network side sends the measurement configuration message to the UE, send an indication message to the UE, so that the UE determines, according to the indication message sent by the network side, to use the first gap measurement configuration information or the second gap measurement configuration information to measure a carrier.

68. The apparatus according to any one of claims 56 to 67, wherein the gap measurement configuration information comprises gap duration information, and the gap duration information comprises 10 milliseconds, 11 milliseconds, or 12 milliseconds, so that the UE measures at least two carriers in a gap indicated by the gap duration information.

69. An SCell channel measurement apparatus, comprising:
a receiving unit, configured to receive a channel state information CSI measurement indication or a CSI reporting indication sent by a network side;
a measurement unit, configured to measure, according to the CSI measurement indication or the CSI reporting indication, a channel corresponding to a secondary serving cell SCell; and
a reporting unit, configured to: determine CSI report information according to a channel measurement result, and report the CSI report information to the network side.

70. The apparatus according to claim 69, wherein the receiving unit is specifically configured to:
receive a periodic CSI measurement indication or a periodic CSI reporting indication that is sent by the network side by using Radio Resource Control RRC signaling; or
receive an aperiodic CSI measurement indication or an aperiodic CSI reporting indication that is sent by the network side by using physical layer signaling.

71. The apparatus according to claim 69 or 70, wherein the measurement unit is specifically configured to:
determine a location of a CSI measurement reference resource according to a location of a reporting subframe carried in the CSI measurement indication or the CSI reporting indication, and measure the CSI measurement reference resource corresponding to the location of the CSI measurement reference resource.

72. The apparatus according to claim 71, wherein the CSI measurement reference resource comprises at least one or a combination of the following: a cell-specific reference signal CRS, a channel state information-reference signal CSI-RS, or channel state information-interference measurement CSI-IM.

73. The apparatus according to claim 71 or 72, wherein when determining the CSI report information according to the channel measurement result, the reporting unit is specifically configured to:
determine whether there is a CSI measurement reference resource, and determine the CSI reporting information according to a determining result and the channel measurement result; or
determine a current channel state of the SCell, and determine the CSI reporting information according to the current channel state and the channel measurement result; or
determine whether there is a CSI measurement reference resource, determine a current channel state of the SCell, and determine the CSI reporting information according to a determining result, the current channel state, and the channel measurement result.

74. The apparatus according to claim 73, wherein when determining whether there is a CSI measurement reference resource, the reporting unit is specifically configured to:
receive a reference resource indication sent by the network side, wherein the reference resource indication comprises a time period for sending a reference signal, or a time period for canceling sending of a reference signal, or a time period for stop sending a reference signal; and
determine, according to the reference resource indication, whether there is a reference signal, and determine, according to a determining result of a reference signal, whether there is a CSI measurement reference resource to which a reference signal belongs; or
measure a reference signal at the location of the CSI measurement reference resource, and obtain a measurement value of the reference signal; compare the measurement value of the reference signal with a specified first threshold; and if the measurement value of the reference signal is greater than or equal to the first threshold, determine that there is a CSI measurement reference resource; otherwise, determine that there is no CSI measurement reference resource.

75. The apparatus according to claim 73, wherein when determining the current channel state of the SCell, the reporting unit is specifically configured to:
perform radio link monitoring RLM on the SCell, and if an RLM result is a radio link failure RLF, determine that the current channel state is an abnormal state; otherwise, determine that the current channel state is a normal state; or
measure, within a specified time period, a reference signal parameter corresponding to the SCell, and if the reference signal parameter is less than a specified second threshold, and/or if a quantity of times that the measured reference signal parameter corresponding to the SCell is less than the specified second threshold is greater than or equal to a specified quantity of times, determine that the current channel state is an abnormal state; otherwise, determine that the current channel state is a normal state; or
if the UE configures a channel of another SCell other than the channel of the SCell, to perform data scheduling, or if the UE moves out of a coverage range of the SCell, or if the UE is asynchronous with the SCell, or if it is measured that a CQI of the SCell is less than a specified third threshold, determine that the current channel state is an abnormal state; otherwise, determine that the current channel state is a normal state.

76. The apparatus according to claim 73, wherein when determining the CSI reporting information according to the determining result and the channel measurement result, the reporting unit is specifically configured to:
when the determining result is that there is a CSI measurement reference resource, use a measurement result of the CSI measurement reference resource as the CSI reporting information; or
when the determining result is that there is no CSI measurement reference resource, use a prestored effective CSI measurement result or a preset CSI measurement value as the CSI reporting information, wherein the effective CSI measurement result is a non-out-of-range Out Of Range CSI measurement result.

77. The apparatus according to claim 73, wherein when determining the CSI reporting information according to the current channel state and the channel measurement result, the reporting unit is specifically configured to:
when the current channel state is a normal state, use a measurement result of the CSI measurement reference resource as the CSI reporting information; or
when the current channel state is an abnormal state, set the CSI reporting information to Out Of Range or a reference signal tracking failure indication of the SCell.

78. The apparatus according to claim 73, wherein when determining the CSI reporting information according to the determining result, the current channel state, and the channel measurement result, the reporting unit is specifically configured to:
when the current channel state is a normal state, and the determining result is that there is a CSI measurement reference resource, use a measurement result of the CSI measurement reference resource as the CSI reporting information; or
when the current channel state is a normal state, and the determining result is that there is no CSI measurement reference resource, use a prestored effective CSI measurement result or a preset CSI measurement value as the CSI reporting information, wherein the effective CSI measurement result is a non-out-of-range Out Of Range CSI measurement result; or
when the current channel state is an abnormal state, set the CSI reporting information to Out Of Rang or a reference signal tracking failure indication of the SCell.

79. An SCell channel measurement apparatus, comprising:
a sending unit, configured to send a channel state information CSI measurement indication or a CSI reporting indication to user equipment UE, so that the UE measures, according to the CSI measurement indication or the CSI reporting indication, a channel corresponding to a secondary serving cell SCell;
a receiving unit, configured to receive CSI reporting information that is reported by the UE and that is determined according to a channel measurement result; and
a scheduling unit, configured to determine, according to the CSI reporting information, scheduling of the UE.

80. The apparatus according to claim 79, wherein the sending unit is specifically configured to:
send a periodic CSI measurement indication or a periodic CSI reporting indication to the UE by using Radio Resource Control RRC signaling; or
send an aperiodic CSI measurement indication or an aperiodic CSI reporting indication to the UE by using physical layer signaling.

81. The apparatus according to claim 79 or 80, wherein the scheduling unit is specifically configured to:
determine, according to a location of a reporting subframe receiving the CSI reporting information, whether there is a CSI measurement reference resource; and
determine, according to a determining result and the CSI reporting information, scheduling of the UE.

82. The apparatus according to claim 81, wherein when determining, according to the determining result and the CSI reporting information, scheduling of the UE, the scheduling unit is specifically configured to:
when the determining result is that there is a CSI measurement reference resource, and the CSI reporting information does not comprise Out of Range and does not comprise a reference signal tracking failure indication of the SCell, perform data transmission scheduling on the UE according to the CSI reporting information;
when the determining result is that there is a CSI measurement reference resource, and the CSI reporting information comprises Out of Range or comprises a reference signal tracking failure indication of the SCell, skip performing data transmission scheduling on the UE;
when the determining result is that there is no CSI measurement reference resource, and the CSI reporting information comprises Out of Range or comprises a reference signal tracking failure indication of the SCell, skip performing data transmission scheduling on the UE; or
when the determining result is that there is no CSI measurement reference resource, and the CSI reporting information does not comprise Out of Range and does not comprise a reference signal tracking failure indication of the SCell, perform data transmission scheduling on the UE according to the CSI reporting information.
